(19) Europäisches Patentamt
European Patent Office
Office européen des brevets

(11) EP 2 193 711 A2

(12) EUROPEAN PATENT APPLICATION

(43) Date of publication:
**09.06.2010 Bulletin 2010/23**

(21) Application number: **09015805.6**

(22) Date of filing: **27.09.2002**

(51) Int Cl.:
***A01N 25/00*** *(2006.01)* ***A01N 55/00*** *(2006.01)*
***A01N 43/653*** *(2006.01)* ***A01N 43/54*** *(2006.01)*
***A01N 43/50*** *(2006.01)* ***A01N 65/00*** *(2009.01)*

(84) Designated Contracting States:
**AT BE BG CH CY CZ DE DK EE ES FI FR GB GR IE IT LI LU MC NL PT SE SK TR**

(30) Priority: **27.09.2001 US 325297 P**

(62) Document number(s) of the earlier application(s) in accordance with Art. 76 EPC:
**02761836.2 / 1 429 604**

(71) Applicant: **Monsanto Technology LLC**
**St. Louis, MO 63167 (US)**

(72) Inventors:
- **Asrar, Jawed**
**Chesterfield, MO 63017 (US)**
- **Heppner, Claudia**
**Hardwick,**
**Cambridgeshire CB3 7XR (GB)**
- **Ding, Yiwei**
**Ballwin, MO 63921 (US)**

(74) Representative: **Bosch, Henry et al**
**Monsanto Europe SA/NV**
**270 avenue de Tervuren**
**1150 Brussels (BE)**

Remarks:
This application was filed on 21-12-2009 as a divisional application to the application mentioned under INID code 62.

# (54) Fungicidal compositions and their applications in agriculture

(57) Fungicidal compositions are provided that comprise a silthiofam-type fungicide and a fungicide that is selected from the group consisting of diazole fungicides, triazole fungicides and strobilurin type fungicides. Combinations of fluqinconazole and simeconazole or azoxystrobin, and simeconazole and azoxystrobin are also provided. Methods for treating plants and plant propagation materials with the fungicidal compositions are also taught, as are plants and their propagation materials which have been so treated, and controlled release formulations that contain the fungicidal compositions.



Printed by Jouve, 75001 PARIS (FR)

## Description

BACKGROUND OF THE INVENTION

This application claims priority to U.S. Provisional Patent Application Serial No. 60/325,297, filed September 27, 2001.

(1) Field of the Invention:

The present invention relates to fungicidal compositions and their applications in agriculture, and more particularly to fungicidal compositions that are particularly effective for the prevention of fungal damage and for the treatment of fungal diseases in plants and plant propagation material.

(2) Description of the Related Art:

Fungal diseases cause significant losses to plants and plant propagation material, and fungicides have become important tools for the management of such diseases. Unlike many insecticides and herbicides, which are applied to kill particular insect pests or weeds, most fungicides are applied prior to the development of fungal diseases, and with the objective of protecting the plant from subsequent fungal infection.

Fungicides can be separated into two categories: protectants and systemics. Protectant fungicides protect the plant against infection at the site of application, but do not penetrate into the plant. They require uniform distribution over the plant and often require repeated application to retain effectiveness. They have a multisite mode of action against fungi, and fungi are not likely to develop resistance. (For further information, see http://tfpg.cas.psu.edu/part3/part36b.htm (07/097/01)). Silthiofam (CAS RN 175217-20-6) is an example of a promising new fungicide that is identified as a protectant in The Pesficide.Manual, 12th Ed., p.835, C. D. S. Tomlin, Ed., British Crop Protection Council, Farnham, Surrey, UK (2000).

Systemic fungicides, on the other hand, prevent disease from developing on parts of the plant that are remote from the site of application of the fungicide. Systemics penetrate into the plant and move within the plant. They can control disease by eradication and often have a very specific mode of action against fungi. An advantage of systemic fungicides is that in addition to protecting plants against infection, they can also provide disease control when applied after the early stages of infection. Examples of fungicides that are identified as having systemic affects include some azoles, such as tebuconazole, simeconazole, and fluquinconazole, among others. See, *e.g.,* Tsuda, M. et al., The BCPC Conference - Pests & Diseases 2000, 557-562 (2000); European Patent Application No. 0 609 099 A1; and Itoh, H. et al., Chem. Pharm. Bull., 48(8):1148 - 1153 (2000).

These and many other fungicides have been shown to be effective in preventing or treating fungal diseases in plants. Such compounds, however, are expensive to synthesize and to purchase. Moreover, they can have unintended negative consequences should they contact animals or humans. And they can be spread by leaching, runoff, wind-drift, and other vectors to areas remote from their intended point of application.

In some instances, combinations of two or more fungicides have been found to provide unexpected synergy, and to permit the control of fungal pathogens at rates of fungicide application that are lower than would be necessary if either of the fungicide components were to be used alone. For example, Walter, H. et al., in PCT Publication WO 00/27200, report fungicidal synergy for certain combinations of a thieno[2,3-d]pyrimidin-4-one with either an azole fungicide, an anilinopyrimidine fungicide, a morpholine fungicide, a strubilurin compound, a pyrrole compound, a phenylamide, or with certain selected dithiocarbamate fungicides. Without guidance, however, it is difficult to predict *a priori* which combinations of fungicides are likely to provide synergy.

It would be useful, therefore, to provide fungicidal compositions that are effective against fungal pests. In particular, it would be useful if these fungicidal compositions provided anti-fungal activity at rates of use that were lower than would normally expected to be necessary. They would provide advantages of being less expensive to purchase, safer to store, handle and apply, and easier to apply due to lower required application rates.

SUMMARY OF THE INVENTION

Briefly, therefore the present invention is directed to a novel fungicidal composition comprising a fungicide having the formula:

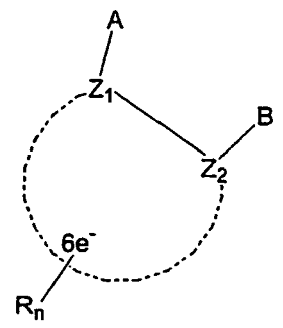

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, -C(O)-$SR_3$, -NH-C(X)$R_4$, and-C(=$NR_3$)-$XR_7$ ;
B is -$W_m$ -Q$(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is -C$(R_3)_p$$H_{(2-p)}$-; or when Q is C, W is selected from --C$(R_3)_p$ $H_{(2-p)}$-, --N$(R_3)_m$$H_{(1-m)}$--, --S$(O)_p$--, and --O--;
X is 0 or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$ ;
or an agronomic salt thereof;
and a fungicide that is selected from the group consisting of diazole fungicides, triazole fungicides and strobilurin type fungicides.

Other useful fungicidal compositions that are within the scope of the present invention include a combination of fluquinconazole and simeconazole, a combination of simeconazole and azoxystrobin, and a combination of fluqinconazole and azoxystrobin.

The present invention also includes a novel fungicidal preparation comprising the fungicidal compositions described herein and a carrier.

The present invention also includes a novel method of protecting a plant or its propagation material against fungal damage or disease, the method comprising treating the plant or its propagation material with an effective amount of any of the fungicidal compositions described herein.

The present invention also includes a novel plant or its propagation material to which has been administered a fungicidal composition comprising any of the fungicidal compositions described herein.

The present invention also includes a novel controlled release formulation comprising:

a fungicidal composition comprising a fungicide having the formula:

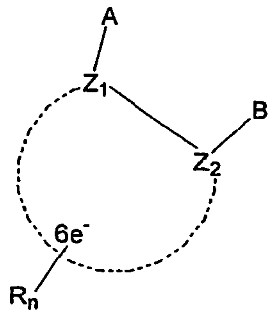

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, -C(O)-$SR_3$, -NH-C(X)$R_4$, and-C(=$NR_3$)-$XR_7$
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$ ;
or an agronomic salt thereof;
and a fungicide that is selected from the group consisting of diazole fungicides, triazole fungicides and strobilurin type fungicides;
wherein the fungicides are included in a controlled release structure.

Other useful controlled release fungicidal compositions that are within the scope of the present invention include combinations of fluquinconazole and simeconazole; simeconazole and azoxystrobin; and fluqinconazole and azoxystrobin, each combination included in a controlled release structure.

Among the several advantages found to be achieved by the present invention, therefore, may be noted the provision of fungicidal compositions that are effective against fungal pests; also the provision of fungicidal compositions

that provide anti-fungal activity at rates of use that are lower than would normally expected to be necessary; also the provision of fungicidal compositions that are less expensive to purchase, safer to store, handle and apply, and easier to apply than the component fungicides alone, due to lower required application rates.

DETAILED DESCRIPTION OF THE PREFERRED EMBODIMENTS

In accordance with the present invention, it has been discovered that a combination of a first fungicide and either a diazole fungicide, a triazole fungicide, a strobilurin-type fungicide, or mixtures thereof, provides a fungicidal composition that is effective against fungal pathogens. A preferred first fungicide is a silthiofam-type fungicide, which is to be understood herein to mean a compound having the general structure:

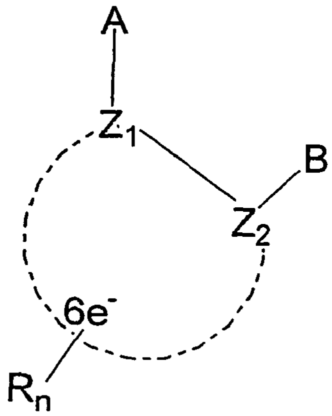

(I)

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, --C(O)--$SR_3$, --NH--C(X)$R_4$, and-C(=$NR_3$)--$XR_7$;
B is -$W_m$-Q$(R_2)_3$ or selected from o-tolyl, 1-naphthyl, 2-naphthyl, and 9-phenanthryl, each optionally substituted with halogen or $R_4$;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;

$R_7$ is $C_1$-$C_4$ alkyl, haloalkyl, or phenyl, optionally substituted with halo, nitro, or $R_4$ ;
or an agronomic salt thereof.

It has been found that when the silthiofam-type fungicide is combined with the diazole, triazole, or strobilurin-type fungicide, the resulting fungicidal composition provides anti-fungal activity. In preferred embodiments, the novel fungicidal composition has properties that are unexpectedly superior to either of the components when used alone. In fact, combinations of silthiofam and simeconazole, and silthiofam and 1-(4-fluorophenyl)-2-(1H-1,2.4-triazole-1-yl)ethanone have demonstrated fungicidal efficacy against a number of important plant fungal pathogens in *in vitro* and *in planta* tests. It has been found to be preferred that at least one of the fungicides of the novel combination be one having activity against the plant fungal pathogen to be controlled. It is also preferred that the fungicidal activity of the fungicides in the combination be substantially free of antagonism. This activity, or antagonism, can be easily measured by the use of, for example, an *in vitro* test such as those described herein.

As that term is used herein, "antagonism" means that the fungicidal activity of one fungicide toward a particular fungal pathogen is substantially cancelled by the presence of another fungicide.

Fungicides that are suitable for use as the silthiofam-type fungicide in the present invention include the compounds described in U.S. Patent Nos. 5,482,974, 5,486,621, 5,498,630, 5,693,667, 5,693,667, 5,705,513, 5,811,411, 5,834,447, 5,849,723, 5,994,270, 5,998,466, 6,028,101, and in publications WO 93/07751, and EP 0 538 231 A1. In particular, such compounds are described in WO 93/07751 and in European Patent Application No. 0 538 231 A1, which describe compounds having the general formula (I), below:

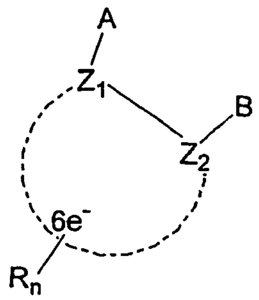

(I)

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, --C(O)--$SR_3$, -NH--C(X)$R_4$, and-C(=$NR_3$)--$XR_7$
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_m$ $H_{(1-m)}$--, --$S(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino,

and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$;
or an agronomic salt thereof.

The term "amine" in --C(X)-amine means an unsubstituted, monosubstituted, or disubstituted amino radical, including nitrogen-bearing heterocycles. Examples of substituents for the amino radical include, but are not limited to, hydroxy; alkyl, alkenyl, and alkynyl, which may be straight or branched chain or cyclic; alkoxyalkyl; haloalkyl; hydroxyalkyl; alkylthio; alkylthioalkyl; alkylcarbonyl; alkoxycarbonyl; aminocarbonyl; alkylaminocarbonyl; cyanoalkyl; mono- or dialkylamino; phenyl, phenylalkyl or phenylalkenyl, each optionally substituted with one or more $C_1$-$C_6$ alkyl, alkoxy, haloalkyl, $C_3$-$C_6$ cycloalkyl, halo, or nitro groups; $C_1$-$C_4$ alkyl or alkenyl groups substituted with heterocycles, optionally substituted with one or more $C_1$-$C_4$ alkyl, alkoxy, haloalkyl, halo, or nitro groups. Examples of such nitrogen-bearing heterocycles, which are bonded at a nitrogen to - C(X)-, include, but are not limited to, morpholine, piperazine, piperidine, pyrrole, pyrrolidine, imidazole, and triazoles, each of which may be optionally substituted with one or more $C_1$-$C_6$ alkyl groups.

Specific examples of the amino radicals useful in the present invention include, but are not limited to, ethylamino, methylamino, propylamino, 2-methylethylamino, 1-propenylamino, 2-propenylamino, 2-methyl-2-propenylamino, 2-propynylamino, butylamino, 1,1-dimethyl-2-propynylamino, diethylamino, dimethylamino, N-(methyl)ethylamino, N-(methyl)-1,1 (dimethyl)ethylamino, dipropylamino, octylamino, N-(ethyl)-1-methylethylamino, 2-hydroxyethylamino, 1-methylpropylamino, chloromethylamino, 2-chloroethylamino, 2-bromoethylamino, 3-chloropropylamino, 2,2,2-trifluoroethylamino, cyanomethyl, methylthiomethylamino, (methylsulfonyl)oxyethylamino, 2-ethoxyethylamino, 2-methoxyethylamino, N-(ethyl)-2-ethoxyethylamino; 1-methoxy-2,2-dimethylpropylamino, cyclopropylamino, cyclobutylamino, cyclopentylamino, cyclohexylamino, methoxymethylamino, N-(methoxymethyl)ethylamino, N-(1-methylethyl)propylamino, 1-methylheptylamino, N-(ethyl)-1-methylheptylamino, 6,6-dimethyl-2-hepten-4-ynylamino, 1,1-dimethyl-2-propynylamino. Further examples include benzylamino, ethylbenzylamino, 3-methoxybenzylamino, 3-(trifluoromethyl)benzylamino, N-methyl-3-(trifluoromethyl)benzylamino, 3,4,5-trimethoxybenzylamino, 1,3-benzodioxol-5-ylmethylamino, phenylamino, 3-(1-methylethyl)phenylamino, ethoxyphenylamino, cyclopentylphenylamino, methoxyphenylamino, nitrophenylamino, 1-phenylethylamino, N-(methyl)-3-phenyl-2-propenylamino, benzotriazolylphenylmethyl, 2-pyridinylmethylamino, N-(ethyl)-2-pyridinylmethylamino, 2-thienylmethylamino, and furylmethylamino.
Further examples of amino radicals include methylhydrazino, dimethylhydrazino, N-ethylanilino, and 2-methylanilino. The amine may also be substituted with diethyl N-ethylphosphoramidic acid, t-butoxycarbonyl, methoxycarbonyl, ethoxycarbonyl, propoxycarbonyl, etc. Of these examples of the amino radical, ethylamino is preferred.

Examples of B include, but are not limited to, trimethylsilyl, ethyldimethylsilyl, diethylmethylsilyl, triethylsilyl, dimethylpropylsilyl, dipropylmethylsilyl, dimethyl-1-(methyl)ethylsilyl, tripropylsilyl, butyldimethylsilyl, pentyldimethylsilyl, hexyldimethylsilyl, cyclopropyldimethylsilyl, cyclobutyldimethylsilyl, cyclopentyldimethylsilyl, cyclohexyldimethylsilyl, dimethylethenylsilyl, dimethylpropenylsilyl, chloromethyldimethylsilyl, 2-chloroethyldimethylsilyl, bromomethyldimethylsilyl, bicycloheptyldimethylsilyl, dimethylphenylsilyl, dimethyl-2-(methyl)phenylsilyl, dimethyl-2-fluorophenylsilyl, and other such silyl groups of the formula $Si(R_2)_3$ ; any such silyl group connected to the $Z_1$ -$Z_2$ ring by a methylene group; and any of these groups wherein germanium or tin is substituted for silicon. Of these examples of B, trimethylsilyl is preferred.

Further examples of B include 1,1-dimethylethyl, 1,1-dimethylpropyl, 1,1-dimethylbutyl, 1,1-dimethylpentyl, 1-ethyl-1-methylbutyl, 2,2-dimethylpropyl, 2,2-dimethylbutyl, 1-methyl-1-ethylpropyl, 1,1-diethylpropyl, 1,1,2-trimethylpropyl, 1,1,2-trimethylbutyl, 1,1,2,2-tetramethylpropyl, 1,1-dimethyl-2-propenyl, 1,1,2-trimethyl-2-propenyl, 1,1-dimethyl-2-butenyl, 1,1-dimethyl-2-propynyl, 1,1-dimethyl-2-butynyl, 1-cyclopropyl-1-methylethyl, 1-cyclobutyl-1-methylethyl, 1-cyclopentyl-1-methylethyl, 1-(1-cyclopentenyl)-1-methylethyl, 1-cyclohexyl-1-methylethyl, 1-(1-cyclohexenyl)-1-rnethylethyl, 1-methyl-1-phenylethyl, 1,1-dimethyl-2-chloroethyl, 1,1-dimethyl-3-chloropropyl, 1,1-dimethyl-2-methoxyethyl, 1,1-dimethyl-2-(methylamino)ethyl, 1,1-dimethyl-2-(dimethylamino)ethyl, 1,1-dimethyl-3-chloro-2-propenyl, 1-methyl-1-methoxyethyl, 1-methyl-1-(methylthio)ethyl, 1-methyl-1-(methylamino)ethyl, 1-methyl-1-(dimethylamino)ethyl, 1-chloro-1-methylethyl, 1-bromo-1-methylethyl, and 1-iodo-1-methylethyl. Of these examples of B, 1,1-dimethylethyl is preferred.

Further examples of B are 1,1-dimethylethylamino, 1,1-dimethylpropylamino, 1,1-dimethylbutylamino, 1,1-dimethylpentylamino, 1-ethyl-1-methylbutylamino, 2,2-dimethylpropylamino, 2,2-dimethylbutylamino, 1-methyl-1-ethylpropylamino, 1,1-diethylpropylamino, 1,1,2-trimethylpropylamino, 1,1,2-trimethylbutylamino, 1,1,2,2-tetramethylpropylamino, 1,1-dimethyl-2-propenylamino, 1,1,2-trimethyl-2-propenylamino, 1,1-dimethyl-2-butenylamino, 1,1-dimethyl-2-propynylamino, 1;1-dimethyl-2-butynylamino, 1-cyclopropyl-1-methylethylamino, 1-cyclobutyl-1-methylethylamino, 1-cyclopentyl-1-methylethylamino, 1-(1-cyclopentenyl)-1-methylethylamino, 1-cyclohexyl-1-methylethylamino, 1-(1-cyclohexenyl)-1-methylethylamino, 1-methyl-1phenylethylamino, 1,1-dimethyl-2-chloroethylamino, 1,1-dimethyl-3-chloropropylamino, 1,1-dimethyl-2-methoxyethylamino, 1,1-dimethyl-2-(methylamino)ethylamino, 1,1-dimethyl-2-(dimethylamino)ethylamino, and 1,1-dimethyl-3-chloro-2-propenylamino. Any of these groups may also have a methyl substitution

on the nitrogen, as in N-(methyl)-1,1-dimethylethylamino and N-(methyl)-1,1-dimethylpropylamino. Of these examples of B, 1,1-dimethylethylamino and N-(methyl)-1,1-dimethylethylamino are preferred.

Further examples of B include 1,1-dimethylethoxy, 1,1-dimethylpropoxy, 1,1-dimethylbutoxy, 1,1-dimethylpentoxy, 1-ethyl-1-methylbutoxy, 2,2-dimethylpropoxy, 2,2-dimethylbutoxy, 1-methyl-1-ethylpropoxy, 1,1-diethylpropoxy, 1,1,2-trimethylpropoxy, 1,1,2-trimethylbutoxy, 1,1,2,2-tetramethylpropoxy, 1,1-dimethyl-2-propenoxy, 1,1,2-trimethyl-2-propenoxy, 1,1-dimethyl-2-butenoxy, 1,1-dimethyl-2-propynyloxy, 1,1-dimethyl-2-butynyloxy, 1-cyclopropyl-1-methylethoxy, 1-cyclobutyl-1-methylethoxy, 1-cyclopentyl-1-methylethoxy, 1-(1-cyclopentenyl)-1-methylethoxy, 1-cyclohexyl-1-methylethoxy, 1-(1-cyclohexenyl)-1-methylethoxy, 1-methyl-1-phenylethoxy, 1,1-dimethyl-2-chloroethoxy, 1,1-dimethyl-3-chloropropoxy, 1,1-dimethyl-2-methoxyethoxy, 1,1-dimethyl-2-(methylamino)ethoxy, 1,1-dimethyl-2-(dimethylamino)ethoxy, 1,1-dimethyl-3-chloro-2-propenoxy. Of these examples of B, 1,1-dimethylethoxy is preferred.

Further examples of B include 1methylcyclopropyl, 1-methylcyclobutyl, 1-methylcyclopentyl, 1-methylcyclohexyl, 1-methylcyclopropylamino, 1-methylcyclobutylamino, 1-methylcyclopentylamino, 1-methylcyclohexylamino, N-(methyl)-1-methylcyclopropylamino, N-(methyl)-1-methylcyclobutylamino, N-(methyl)-1-methylcyclopentylamino, and N-(methyl)-1-methylcyclohexylamino.

$R_n$ may be any substituent(s) which do(es) not unduly reduce the effectiveness of the compounds to function in the method of disease control. $R_n$ is generally a small group; "n" is preferably 1 for benzene rings and 2 for furan and thiophene. R is more preferably methyl or halogen, and more preferably is located adjacent to A.

As used herein, the term "alkyl", unless otherwise indicated, means an alkyl radical, straight or branched chain, having, unless otherwise indicated, from 1 to 10 carbon atoms. The terms "alkenyl" and "alkynyl" mean unsaturated radicals having from 2 to 7 carbon atoms. Examples of such alkenyl groups include ethenyl, 1-propenyl, 2-propenyl, 1-butenyl, 2-butenyl, 3-butenyl, 2-methyl-1-propenyl, 2-methyl-2-propenyl, 1-methylethenyl, and the like. Examples of such alkynyl groups include ethynyl, 1-propynyl, 2-propynyl, 1,1-dimethyl-2-propynyl, and so forth. Substituent groups may also be both alkenyl and alkynyl, for example, 6,6-dimethyl-2-hepten-4-ynyl.

As used herein, the term "alkoxy" means an alkyl group having, unless otherwise indicated, from 1 to 10 carbon atoms connected via an ether linkage. Examples of such alkoxy groups include methoxy, ethoxy, propoxy, 1-methylethoxy, and so forth.

As used herein, the term "alkoxyalkyl" means an ether radical having, unless otherwise indicated, from 1 to 10 carbon atoms. Examples of such alkoxyalkyl groups include methoxymethyl, methoxyethyl, ethoxymethyl, ethoxyethyl, and so forth.

As used herein, the terms "monoalkylamino" and "dialkylamino" each mean an amino group having, respectively, 1 or 2 hydrogens replaced with an alkyl group.

As used herein, the term "haloalkyl" means an alkyl radical having one or more hydrogen atoms replaced by halogens, including radicals having all hydrogen atoms substituted by halogen. Examples of such haloalkyl groups are fluoromethyl, difluoromethyl, trifluoromethyl, chloromethyl, trichloromethyl, and so forth.

As used herein, the term "halo" means a radical selected from chloro, bromo, fluoro, and iodo.

Compounds that are useful as the first fungicide of the present invention include compounds that are described in U.S. Patent No. 5,811,411 as compounds having the same formula as in Formula (I), above, except:
wherein $Z_1$ and $Z_2$ are C and are part of an aromatic ring which is thiophene;
A is selected from --C(X)-amine, --C(O)--$SR_3$, --NH--C(X)$R_4$, and-C(=$NR_3$)--$XR_7$ ;
B is --$W_m$--Q$(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and -O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally

substituted with halo;

each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino, and further when Q is C, $R_2$ may also be selected from halo, alkoxy, alkylthio, alkylamino, and dialkylamino; and further when Q is C, then two $R_2$ groups may be combined to form a cycloalkyl group with Q;
$R_3$ is $C_1$-$C_4$ alkyl;
$R_4$ is $C_1$-$C_4$ alkyl, haloalkyl, alkoxy, alkylthio, alkylamino, or dialkylamino; $R_7$ is $C_1$-$C_4$ alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 5,998,466 as compounds having the same formula as in Formula (I), above, except:
wherein $Z_1$ and $Z_2$ are C and are part of an aromatic ring which is thiophene;
A is selected from --C(X)-amine, wherein the amine is substituted with a first and a second amine substituent or with an alkylaminocarbonyl and a hydrogen, --C(O)--$SR_3$, --NH--C(X)$R_4$, and --C(=$NR_3$)-$XR_7$;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio; and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--;
X is O or S;
n is 2;
m is 0 or 1;
p is 0, 1, or 2;
wherein two R groups are combined to form a nonheterocyclic ring fused with the thiophene ring, which is not a benzothiophene other than a tetrahydrobenzothiophene, said two R groups being selected from the group consisting of $C_1$ - $C_4$ alkyl, alkenyl, $C_3$ - $C_6$ cycloalkyl and cycloalkenyl, each optionally substituted with hydroxy, thio, phenyl, $C_1$ - $C_4$ alkoxy, alkylthio, alkylsulfinyl, or alkylsufonyl;
each $R_2$ is independently selected from alkyl, alkenyl, alkynyl, cycloalkyl, cycloalkenyl and phenyl, each optionally substituted with $R_4$ or halogen; and wherein when Q is C, $R_2$ may also be selected from halo, alkoxy, alkylthio, alkylamino, and dialkylamino; and further when Q is C, then two $R_2$ groups may be combined to form a cycloalkyl group with Q;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is C1-C4 alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 5,834,447 as compounds having the same formula as in Formula (I), above,except:
wherein $Z_1$ and $Z_2$ are C and are part of an aromatic ring which is thiophene;

A is --C(X)-amine wherein the amine is an N-bonded heterocyclic compound chosen from the group consisting of morpholine, piperazine, piperidine, and pyrrolidine, each optionally substituted with $C_3$ - $C_6$ alkyl groups;

B is --$W_m$--$Q(R_2)_3$ or selected from o-tolyl, 1-naphthyl, 2-naphthyl, and 9-phenanthryl, each optionally substituted with halogen or $R_4$ ;
Q is C or Si;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--;
XisO;
n is 2;
m is 0 or 1;
p is 0, 1, or 2;
wherein the two R groups are alkenyl groups and are combined to form a fused ring with the thiophene ring with is benzothiophene; wherein the alkenyl groups are optionally substituted with halo, hydroxy, thio, amino, nitro, cyano, formyl, phenyl, $C_2$ - $C_4$ alkoxy, alkylcarbonyl, alkylthio, alkylamino, dialkylamino, alkoxycarbonyl, (alkylthio)carbonyl,

alkylaminocarbonyl, dialkylaminocarbonyl, alkylsulfinyl, or alkylsulfonyl;
each $R_2$ is independently selected from alkyl, alkenyl, alkynyl, cycloalkyl, cycloalkenyl, and phenyl, each optionally substituted with $R_4$ or halogen; and wherein when Q is C, $R_2$ may also be selected from halo, alkoxy, alkylthio, alkylamino, and dialkylamino; or wherein two $R_2$ groups may be combined to form a cyclo group with Q;
$R_3$ is $C_1$-$C_4$ alkyl; and
$R_4$ is $C_1$-$C_4$ alkyl, haloalkyl, alkoxy, alkylthio, alkylamino, or dialkylamino;
or an agronomic salt thereof

Compounds that are useful as the first fungicide of the present invention include compounds that are described in U.S. Patent No. 5,498,630 as compounds having the same formula as in Formula (I), above, except:
wherein $Z_1$ and $Z_2$ are C and are part of an aromatic ring which is benzothiophene; and
A is selected from --C(X)-amine wherein the amine is an unsubstituted, monosubstituted or disubstituted nonheterocyclic amino radical, --C(O)--$SR_3$, --NH--C(X)$R_4$, and --C(=$NR_3$)-$XR_7$
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 5,693,667 as compounds having the same formula as in Formula (I), above, except:
wherein $Z_1$ and $Z_2$ are C or N and are part of an aromatic ring which is furan; and
A is selected from --C(X)-amine wherein the amine is substituted with a first and a second amine substituent or with an alkylaminocarbonyl and a hydrogen, --C(O)--$SR_3$, --NH--C(X)$R_4$, and --C(=$NR_3$)--$XR_7$ ;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$--$Q(R_2)_3$ or selected from o-tolyl, 1-naphthyl, 2-naphthyl, and 9-phenanthryl, each optionally substituted with halogen or $R_4$ ;

Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--:
X is O or S;
n is 0, 1, or 2;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 5,498,630 as compounds having the same formula as in Formula (I), above, except:
wherein $Z_1$ and $Z_2$ are C and are part of an aromatic ring which is benzothiophene; and
A is selected from -C(X)-amine wherein the amine is an unsubstituted, monosubstituted or disubstituted nonheterocyclic amino radical, --C(O)--$SR_3$, --NH--$C(X)R_4$, and --$C(=NR_3)$-$XR_7$ ;
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;

wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 5,693,667 as compounds having the same formula as in Formula (I), above, except:
wherein $Z_1$ and $Z_2$ are C and are part of an aromatic ring which is furan; and
A is selected from --C(X)-amine wherein the amine is substituted with a first and a second amine substituent or with an alkylaminocarbonyl and a hydrogen, --C(O)--$SR_3$, --NH--C(X)$R_4$, and --C(=$NR_3$)-$XR_7$ ;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$- $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$--$Q(R_2)_3$ or selected from o-tolyl, 1-naphthyl, 2-naphthyl, and 9-phenanthryl, each optionally substituted with halogen or $R_4$;
Q is C, Si, Ge, or Sn;
W is --$C(R_3)_pH_{(2-p)}$--; or when Q is C, W is selected from --$C(R_3)_p$ $H_{(2-p)}$--, --$N(R_3)_mH_{(1-m)}$--, --$S(O)_p$--, and --O--;
X is 0 or S;
n is 0, 1, or 2;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 5,705,513 as compounds having the same formula as in Formula (1), above, except:
wherein $Z_1$ and $Z_2$ are C and are part of an aromatic ring which is pyridine; and
A is selected from the group consisting of --C(O)--$SR_3$, --NH-C(X)$R_4$, and --C(=$NR_3$)--$XR_7$ and -C(X)-amine wherein the amine is substituted with alkylaminocarbonyl and a hydrogen or wherein the amine has a first and a second amine substituent;
the first amine substituent is selected from the group consisting of $C_1$ - $C_{10}$ straight or branched alkyl, alkenyl, or alkynyl

groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is $--W_m--Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is $--C(R_3)_pH_{(2-p)}--$; or when Q is C, W is selected from $--C(R_3)_p H_{(2-p)}--$, $--N(R_3)_mH_{(1-m)}--$, $--S(O)_p--$, and --O--;
X is O or S;
n is 0, 1, or 2;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino; or wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 5,849,723 as compounds having the same formula as in Formula (I), above, except:
wherein $Z_1$ and $Z_2$ are C and are part of an aromatic ring which is benzene; and
A is selected from the group consisting of --C(X)-amine wherein the amine is substituted with a first and a second amine substituent or with an alkylaminocarbonyl and a hydrogen; $--C(O)--SR_3$, $--NH--C(X)R_4$, and-$C(=NR_3)--XR_7$;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$- $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is $-W_m --Q(R_2)_3$ or selected from o-tolyl, 1-naphthyl, 2-naphthyl, and 9-phenanthryl, each optionally substituted with halogen or $R_4$ ;
Q is Si, Ge, or Sn;
W is $-C(R_3)_p H_{(2-p)}$ -;
X is O or S;
n is 0, 1, 2 or 3;
m is 0 or 1;
p is 0, 1, or 2;

each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;
each $R_2$ is independently selected from alkyl, alkenyl, alkynyl, cycloalkyl, cycloalkenyl and phenyl, each optionally substituted with $R_4$ or halogen;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$ ;
or an agronomic salt thereof.

Compounds that are useful as the first fungicide of the present invention include compounds that are described in U.S. Patent No. 6,028,101 as compounds having the same formula as in Formula (I), above, except:
wherein $Z_1$ and $Z_2$ are C and are part of an aromatic ring which is furan; and
A is selected from --C(X)-amine wherein the amine is substituted with a first and a second amine substituent or with an alkylaminocarbonyl and a hydrogen, --C(O)--$SR_3$, --NH--C(X)$R_4$, and --C(=$NR_3$)--$XR_7$ ;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl; alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is -$W_m$ -Q$(R_2)_3$ or selected from o-tolyl, 1-naphthyl, 2-naphthyl, and 9-phenanthryl, each optionally substituted with halogen or $R_4$;
Q is C, Si, Ge, or Sn;
W is --$C(R_3)_p$ $H_{(2-p)}$--; or when Q is C, W is selected from --$C(R_3)_p$ $H_{(2-p)}$--, --$N(R_3)_m$ $H_{(1-m)}$--, --$S(O)_p$--, and --O--;
X is O or S;
n is 2;
m is 0 or 1;
p is 0, 1, or 2;
wherein the two R groups are combined to form a nonheterocyclic ring fused to said furan ring which is not benzofuran when A is -C(X)-amine, B is -Wm(Q)-$(R_2)_3$, and Q is C or Si, said R groups being selected from the group consisting of $C_1$ - $C_4$ alkyl, alkenyl, $C_3$ - $C_6$ cycloalkyl and cycloalkenyl, each optionally substituted with hydroxy, thio, phenyl, $C_1$ - $C_4$ alkoxy, alkylthio, alkylsulfinyl, or alkylsulfonyl; and
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino; wherein further when Q is C, then two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$ ;
or an agronomic salt thereof.

Compounds that are useful as the first fungicide in the present invention can also be selected from those described in U.S. Patent No. 5,482,974, namely, a compound having the formula

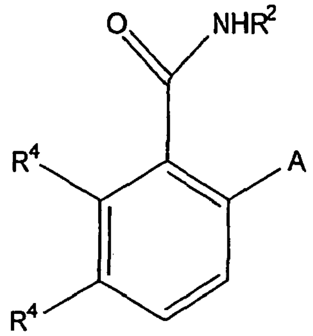

wherein $R^2$ is ethyl, iso-propyl, propyl or allyl;
A is $N(CH_3)_{1-n}$ $H_n$ $R^5$ or $OR^6$ wherein n is 0 or 1, $R^5$ is $(CH_3)_m$ $(CH_3\ CH_2)_{3-m}$ C, 1-methyl-1-cyclopentyl, 1-methyl-1-cyclohexyl or 2,3-dimethyl-2-butyl wherein m is 0, 1, 2 or 3 and $R^6$ is independently $R^5$, or 2,3,3-trimethyl-2-butyl;
$R^3$ is H or independently $R^4$ ; and
$R^4$ is halo or $CH_3$;
with the proviso that when A is $N(CH_3)_{1-n}$ $H_n$ $R^5$, if $R^3$ is H and $R^5$ is 1-methyl-1-cyclohexyl or $(CH_3)_m$ $(CH_2\ CH_3)_{3-m}$ C, where m is 0 or 3, or if $R^3$ is halo and $R^2$ is $(CH_3)_m$ $(CH_3\ CH_2)_{3-m}$ C, where m is 3, then $R^2$ cannot be ethyl;
and with the proviso that when A is $OR^6$ then m is equal to or less than 2, and if $R^3$ is H or halo and $R^2$ is ethyl or isopropyl, then $R^6$ is $(CH_3)_M$ $(CH_3\ CH_2)_{3-M}$ C where m is 1;
or an agronomic salt thereof.

Compounds that are useful as the first fungicide in the present invention can also be selected from those described in U.S. Patent No. 5,994,270, namely, a compound having the formula:

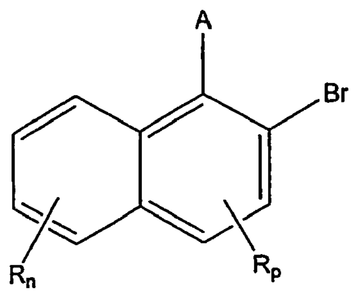

(a)

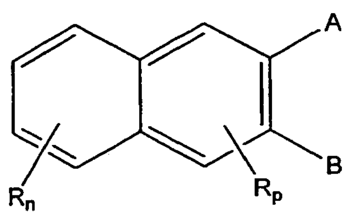

(b)

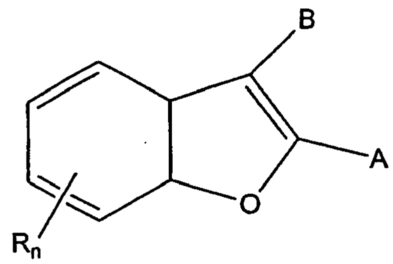

(c)

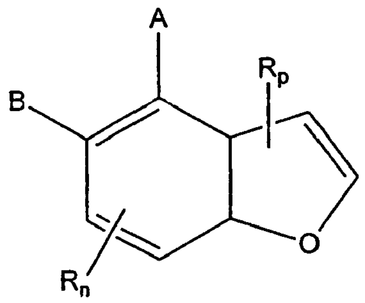

(d)

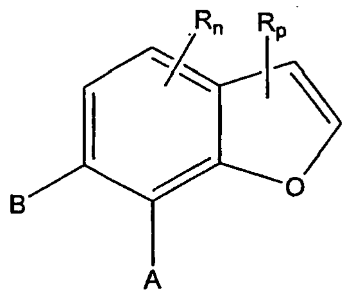

(e)

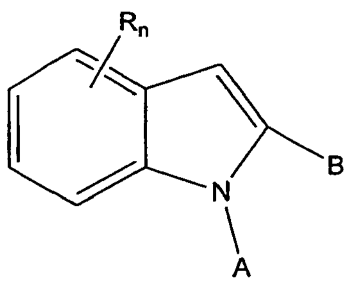

(f)

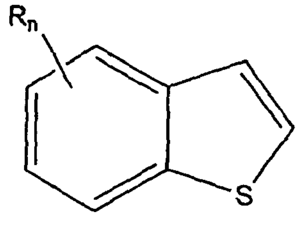

(g)

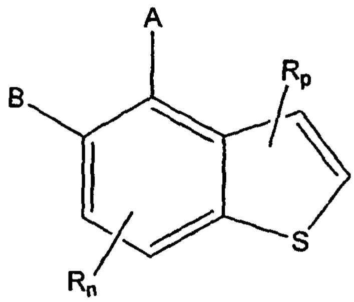

(h)

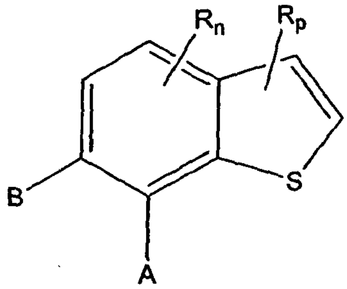

(i)

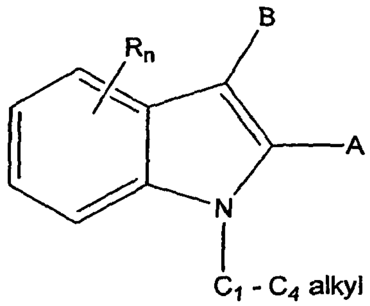

(j)

where A is --C(X)-amine; B is -$W_m$ --$Q(R_2)_3$; and A can be B when B is A except when the formula is f), then Q cannot be Si;
Q is C or Si;
W is --NH--, --O-- or $NCH_3$ --;
X is O or S;
m is 0 or 1, provided that m is 0 when Q is Si;
n is 0, 1, 2, or 3
p is 0, 1 or 2, and n plus p is equal to or less than 3; each R is independently selected from

a) halo, formyl, cyano, amino, nitro, thiocyanato, isothiocyanato, trimethylsilyl, and hydroxy;
b) $C_1$ -$C_4$ alkyl, alkenyl, alkynyl, $C_3$ -$C_6$ cycloalkyl, and cycloalkenyl, each optionally substituted with halo, hydroxy, thio, amino, nitro, cyano, formyl, phenyl, $C_1$ -$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$ -$C_4$ alkyl, alkenyl, alkynyl, alkoxy, alkylthio, alkylamino, dialkylamino, haloalkyl, and haloalkenyl;
d) $C_1$ -$C_4$ alkoxy, alkenoxy, alkynoxy, $C_3$ -$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo; each $R_2$ is independently selected from alkyl, alkenyl, alkynyl, cycloalkyl, cycloalkenyl and

phenyl, each optionally substituted with $R_4$ or halogen; and wherein, when Q is C, $R_2$ may also be selected from halo, alkoxy, alkylthio, alkylamino, and dialkylamino; wherein two $R_2$ groups may be combined to form a cyclo group with Q; $R_4$ is $C_1$--$C_4$ alkyl, haloalkyl, alkoxy, alkylthio, alkylamino, or dialkylamino; or an agronomic salt thereof.

A preferred active agent is a compound having the structure:

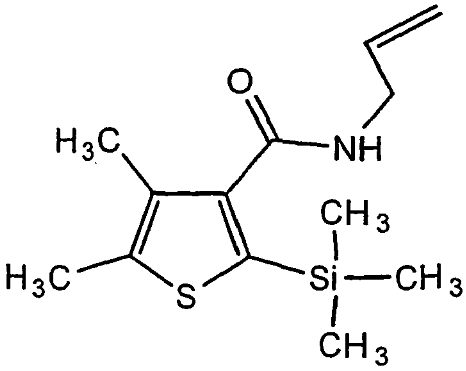

and which has a CAS name of 4,5-dimethyl-N-(2-propenyl)-2-(trimethylsilyl)-3-thiophenecarboxamide, having a CAS registration number of 175217-20-6, and for which the ISO common name is silthiofam.
Further information about silthiofam can be found in U.S. Patent No. 5,486,621.

The first fungicide that is described above can be combined with another fungicide (which may be referred to herein as a "second fungicide") to form the fungicidal composition of the present invention. Preferred second fungicides include a diazole fungicide, a triazole fungicide, and a strobilurin type fungicide. Generally, any diazole fungicide, triazole fungicide, or strobilurin type fungicide can serve as the second fungicide of the present combination. Examples of diazole fungicides, triazole fungicides and strobilurin type fungicides are identified in The Pesticide Manual, 12th Ed., C. D. S. Tomlin, Ed., British Crop Protection Council, Farnham, Surrey, UK (2000), but such listing is not intended to be limiting.

Examples of triazole fungicides that are useful as the second fungicide in the present invention include, without limitation, amitrol, azaconazole, bitertanol, bromuconazole, climbazole, clotrimazole, cyproconazole, diclobutrazol, difenoconazole, diniconazole, diniconazole-M, epoxiconazole, etaconazole, fenbuconazole, fluquinconazole, fluotrimazole, flusilazole, flutriafol, furconazole, furconazole-cis, hexaconazole, imibenconazole, ipconazole, metconazole, myclobutanil, paclobutrazol, penconazole, propiconazole, quinconazole, simeconazole, tebuconazole, tetraconazole, triadimefon, triadimenol, triazbutil, triticonazole, and 1-(4-fluorophenyl)-2-(1H-1,2,4-triazole-1-yl)ethanone. Mixtures of such triazoles can also be used as the second fungicide.

Diazole fungicides that are useful in the subject combination include imidazoles and pyrazoles. Examples of diazole fungicides that are useful as the second fungicide in the present invention include, without limitation, imazalil, oxpoconazole, pefurazoate, prochloraz, and trifulmizole. Mixtures of such diazoles can also be used as the second fungicide.

Examples of strobilurin-type fungicides that are useful as the second fungicide in the present invention include, without limitation, azoxystrobin, dimoxystrobin, famoxadone, kresoxim-methyl, metominostrobin, picoxystrobin, pyraclostrobin, and trifloxystrobin. Mixtures of strobilurin type fungicides can also be used as the second fungicide of the present composition.

It is also believed that mixtures that include one or more diazole fungicide, one or more tiazole fungicide, and/or one or more strobilurin-type fungicide can also be used as the second fungicide of the present composition.

Other triazole fungicides that are useful in the present composition are those that are described in U.S. Patent Nos. 4,510,136; 5,489,606; and 5,977,152.

Compounds that are preferred for use as the second fungicide are described in European Patent EP 0 609 099 A1 and U.S. Patent No. 5,306,712. Such compounds have the formula:

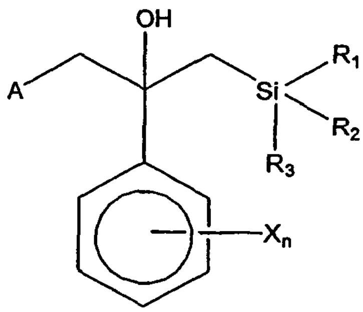

wherein:

A is a 1,2,4-triazol-1-yl group or an imidazol-1-yl-group;
n is 0, 1, 2, or 3, and when n is 2 or 3, the groups represented by X may be the same or different;
X is a halogen atom, a phenyl group, an alkyl group having from 1 to 6 carbon atoms, a haloalkyl group having from 1 to 6 carbon atoms and having at least one halogen atom, an alkoxy group having from 1 to 6 carbon atoms, or a haloalkoxy group having from 1 to 6 carbon atoms and having at least one halogen atom, or $(X)_n$ is an alkylenedioxy group having 1 or 2 carbon atoms;
$R_1$ is an alkyl group having from 1 to 4 carbon atoms or a phenyl group which is unsubstituted or is substituted by at least one halogen atom; and
$R_2$ and $R_3$ are the same or different and each is an alkyl group having from 1 to 4 carbon atoms;
or a salt thereof.

Simeconazole ((*RS*)-2-(4-fluorophenyl)-1-(H-1,2,4-triazol-1-yl)-3-(trimethylsilyl)propan-2-ol, Reg. No. 149508-90-7), is a preferred compound of this type of fungicide.

Other compounds that are preferred for use as the second fungicide of the present combination are fungicidal imidazoles and 1,2,4-triazoles that are described in GB Patent 1 533 706, and having the general formula:

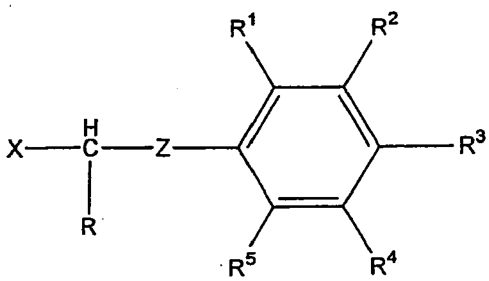

wherein R is hydrogen or an optionally substituted hydrocarbyl group, Z is

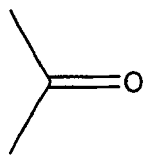

or a functional derivative thereof,
each of the groups $R^1$ to $R^5$, which may be the same or different, in a hydrogen or halogen atom, an optionally substituted hydrocarbyl or hydrocarbyloxy group, or a nitro or amino group, and X is a group of general formula (A), (A') or (B);

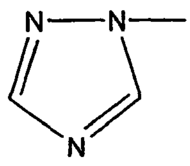
(A)

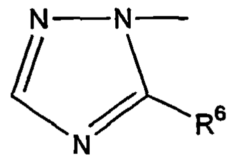
(A')

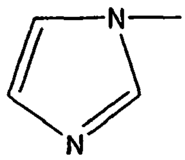
(B)

wherein $R^6$ is a halogen atom or an alkyl group;
R being an optionally substituted hydrocarbyl group other than an alkyl group when X is a group of general formula (B); or a salt thereof.

A preferred triazole fungicide is simeconazole, which has a CAS name of α-(4-fluoropheny)-α-[(trimethylsilyl) methyl]-1*H*-1,2,4-triazole-1-ethanol, and a CAS Reg. No. of 149508-90-7. A commercial preparation containing simeconazole is available, for example, as Simeconazole F-155, from Sankyo.

Another preferred triazole fungicide is 1-(4-Fluorophenyl)-2-(1H-1,2,4-triazole-1-yl)ethanone, having the formula:

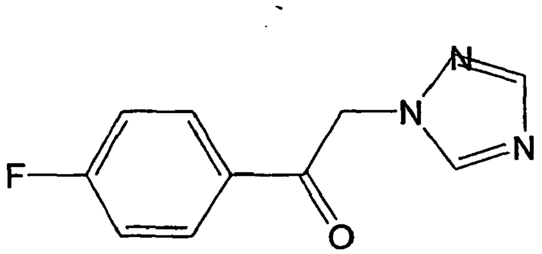

Another preferred triazole fungicide is fluquinconazole, having CAS Reg. No. 136426-54-5, and having a CAS chemical name of 3-(2,4-dichlorophenyl)-6-fluoro-2-(1*H*-1,2,4-triazol-1-yl)-4(3*H*)-quinazolinone.

Such preferred triazole fungicides share the structural features of a halogen-substituted phenyl group that is linked to a 1,2,4-triazole group. Without being bound to this or any other theory, the inventors believe that a combination of a triazole fungicide having these structural features with a fungicide of the silthiofam-type may provide a fungicidal composition having unexpectedly superior antifungal activity.

Examples of triazole fungicides that are preferred for use as the second fungicide of the present combination include fluquinconazole, simeconazole, tebuconazole, tetraconazole, triticonazole, and 1-(4-fluorophenyl)-2-(1H-1,2,4-triazole-1-yl)ethanone, or mixtures thereof.

Another useful fungicidal composition within the scope of the present invention is a combination of fluquinconazole and simeconazole. In this combination, fluquinconazole is the first fungicide and simeconazole is the second fungicide.

Another useful fungicidal composition within the scope of the present invention is a combination of simeconazole and azoxystrobin. In this combination, simeconazole is the first fungicide and azoxystrobin is the second fungicide.

Another useful fungicidal composition within the scope of the present invention is a combination of fluqinconazole and azoxystrobin. In this combination, fluqinconazole is the first fungicide and azoxystrobin is the second fungicide.

Any of the fungicides that are useful in the combinations of the present invention can be used in any purity that passes for such fungicide in the commercial trade. The fungicide can be used in any form in which it is received from the supplier, or in which it is synthesized. It is preferred that the fungicide be supplied in the form of a liquid, which form includes, without limitations, solutions, suspensions and dispersions. However, the liquid can be a substantially pure form of the fungicide, or it can be the fungicide dissolved in a solvent. Commonly, if a solvent is present, such solvents are organic liquid solvents that are commonly used in such applications. If the fungicide is water soluble, then water can be used as the solvent.

The fungicidal composition of the present invention can be used to treat a plant or plant propagation material - such as a seed, cutting, rhizome, tuber, or bulb, for example - to ameliorate or prevent damage due to fungal pathogens.

The treatment of a plant or plant propagation material with a fungicidal composition by the method of this invention can be accomplished in several ways. The fungicidal composition may be applied directly to a plant seed, or

to soil in which the seed is to be planted, for example, at the time of planting along with the seed. Alternatively, it may be applied to the soil after planting and germination, or to the foliage of the plant after emergence.

When it is said that "an effective amount" of a fungicidal composition is used in the subject method, it is meant that a sufficient amount of the fungicidal composition is applied to the plant or its propagation material to achieve either an increase in the yield and/or the vigor of the plant, or to cause fungicidal or fungistatic activity in *in vitro* tests. The amount of the fungicides that are useful in the subject method will be discussed in more detail below.

It is preferred that the plant or its propagation material is treated with an amount of the fungicidal composition sufficient to provide a fungicide concentration of from about 0.01 mg/kg to about 10% by weight, more preferred is an amount of the fungicidal composition sufficient to provide a fungicide concentration of from about 0.1 mg/kg to about 1% by weight, and even more preferred is an amount of the fungicidal composition sufficient to provide a fungicide concentration of from about 1 mg/kg to about 1000 mg/kg.

It is also preferred that the plant or its propagation material is treated with a fungicidal composition in which the weight ratio of the silthiofam-type fungicide relative to the diazole, triazole, or strobilurin-type fungicide is within a range of from about 1:10,000 to about 10,000:1, more preferred is a fungicidal composition in which the weight ratio of the silthiofam-type fungicide relative to the diazole, triazole, or strobilurin-type fungicide is within a range of from about 1:1000 to about 1000:1, even more preferred is a fungicidal composition in which the weight ratio of the silthiofam-type fungicide relative to the diazole, triazole, or strobilurin-type fungicide is within a range of from about 1:100 to about 100:1, yet more preferred is a weight ratio of from about 1:10 to about 10:1, a weight ratio of from about 1:8 to about 8:1 is even more preferred, and a weight ratio of from about 1:4 to about 4:1 is yet more preferred.

Compositions for soil application include clay granules which may be applied in-furrow, as broadcast granules or as impregnated fertilizer granules. In addition, the fungicidal composition may be applied to the soil as a preemergent or postemergent spray, or to the plant as a postemergent spray.

In one embodiment, the fungicidal composition is applied to the seed in a treatment prior to planting. One method of carrying out such treatment is to apply a coating containing the fungicidal composition to the seed. This technique is commonly used in many crops to provide fungicides for control of various phytopathological fungi.

When the seed is treated prior to planting with a preparation that contains the present fungicidal composition, it can be treated with an amount of the preparation sufficient to include the fungicidal composition in an amount that provides an effective amount of the fungicidal composition in the region of the seed, but is lower than an amount that is toxic to the seed. It is preferred that the amount of fungicidal composition that is applied to the seed is within the range of about 0.1 gm of the fungicidal composition/100 kg of seed to about 1000 gm of the fungicidal composition/100 kg of seed. It is more preferred that the range is within the range of about 1 gm/100 kg and about 500 gm/100 kg, even more preferred that the fungicidal composition be applied to the seed in an amount that is within the range of about 2 gm/100 kg and about 200 gm/100 kg, even more preferred that it be applied in an amount of from about 10 gm/100 kg of seed to about 100 gm/100 kg of seed, and a range of about 20 gm/100 kg to about 50 gm/100 kg of seed is yet more preferred.

Plants and/or seed to be treated by the subject method can be treated with one or more forms of the fungicidal composition agents without any additional materials being present. However, in some cases, it is preferred to use the fungicidal composition in combination with other materials.

If desirable, the fungicidal composition can be combined with other materials such as herbicides, pesticides - such as insecticides, nematicides, acaricides, fungicides, and the like - growth factors, fertilizers, and any other material that will provide a desirable feature for protecting, sprouting and growing the plant, and/or for improving the yield or vigor of the plant. The choice of such other materials will depend on the crop and the diseases known to be a threat to that crop in the location of interest.

The fungicidal composition may be present in such mixtures at levels from 0.01 to 95 percent by weight. Preferably, such mixtures contain the fungicidal composition in an amount of from about 1% to about 50%, by weight, and more preferably, in an amount of from about 5% to about 25%, by weight.

The fungicidal compositions of this invention may be combined with a carrier, and other materials if desired, to form a fungicidal preparation. The preparations of this invention, including concentrates that require dilution prior to application, may contain at least one fungicidal composition and an adjuvant in liquid or solid form. The compositions are prepared by admixing the fungicidal composition with or without an adjuvant plus diluents, extenders, carriers, and conditioning agents to provide compositions in the form of finely-divided particulate solids, granules, pellets, solutions, dispersions or emulsions. Thus, it is believed the fungicidal composition could be used with an adjuvant such as a finely-divided solid, a liquid of organic origin, water, a wetting agent, a dispersing agent, an emulsifying agent or any suitable combination of these.

Agronomically acceptable carriers for fungicidal actives are well known and include, for example, solid carriers such as fine powders or granules of kaolin clay, attapulgite clay, bentonite, acid clay, pyrophyllite, talc, diatomaceous earth, calcite, corn starch powder, walnut shell powder, urea, ammonium sulfate, synthetic hydrated silicon dioxide and the like.

Acceptable liquid carriers include, for example, aromatic hydrocarbons such as xylene, methylnaphthalene and the like,

alcohols such as isopropanol, ethylene glycol, cellosolve and the like, ketones such as acetone, cyclohexanone, isophorone and the like, vegetable oils such as soybean oil, cottonseed oil, corn oil and the like, dimethyl sulfoxide, acetonitrile, water and the like.

Suitable wetting agents are believed to include alkyl benzene and alkyl naphthalene sulfonates, alkyl and alkyl aryl sulfonates, alkyl amine oxides, alkyl and alkyl aryl phosphate esters, organosilicones, fluoroorganic wetting agents, alcohol ethoxylates, alkoxylated amines, sulfated fatty alcohols, amines or acid amides, long chain acid esters of sodium isothionate, esters of sodium sulfosuccinate, sulfated or sulfonated fatty acid esters, petroleum sulfonates, sulfonated vegetable oils, ditertiary acetylenic glycols, block copolymers, polyoxyalkylene derivatives of alkylphenols (particularly isooctylphenol and nonylphenol) and polyoxyalkylene derivatives of the mono-higher fatty acid esters of hexitol anhydrides (*e.g.*, sorbitan). Preferred dispersants are methyl, cellulose, polyvinyl alcohol, sodium lignin sulfonates, polymeric alkyl naphthalene sulfonates, sodium naphthalene sulfonate, polymethylene bisnaphthalene sulfonate, and neutralized polyoxyethylated derivatives or ring-substituted alkyl phenol phosphates. Stabilizers may also be used to produce stable emulsions, such as magnesium aluminum silicate and xanthan gum.

Other formulations include dust concentrates comprising from 0.1 to 60% by weight of the fungicidal composition on a suitable extender, optionally including other adjuvants to improve handling properties, *e.g.*, graphite. These dusts may be diluted for application at concentrations within the range of from about 0.1-10% by weight.

Concentrates may also be aqueous emulsions, prepared by stirring a non-aqueous solution of a water insoluble fungicidal composition and an emulsification agent with water until uniform and then homogenizing to give stable emulsion of very finely divided particles. Or they may be aqueous suspensions, prepared by milling a mixture of a water-insoluble fungicidal composition and wetting agents to give a suspension, characterized by its extremely small particle size, so that when diluted, coverage is very uniform. Suitable concentrations of these formulations contain from about 0.1-60% preferably 5-50% by weight of active agent.

Concentrates may be solutions of a fungicidal composition in suitable solvents together with a surface active agent. Suitable solvents for the fungicidal compositions of this invention for use in seed treatment include propylene glycol, furfuryl alcohol, other alcohols or glycols, and other solvents that do not substantially interfere with seed germination. If the fungicidal composition is to be applied to the soil, then solvents such as N,N-dimethylformamide, dimethylsulfoxide, N-methylpyrrolidone, hydrocarbons, and water immiscible ethers, esters, or ketones are useful.

For application to the soil at the time of planting, a granular formulation may be used. Granules are physically stable particulates compositions comprising at least one fungicidal composition adhered to or distributed through a basic matrix of an inert, finely divided particulate extender. In order to aid leaching of the fungicidal composition from the particulate, a surface active agent such as those listed hereinbefore, or for example, propylene glycol, can be present in the preparation. Natural clays, pyrophyllites, illite, and vermiculite are examples of operable classes of particulate mineral extenders. The preferred extenders are the porous, absorptive, preformed particles such as preformed and screened particulate attapulgite or heat expanded, particulate vermiculite and the finely divided clays such as kaolin clays, hydrated attapulgite or bentonitic clays. These extenders are sprayed or blended with the fungicidal composition to form the granules.

The granular compositions of this invention may contain from about 0.1 to about 30 parts by weight of a fungicidal composition per 100 parts by weight of clay and 0 to about 5 parts by weight of surface active agent per 100 parts by weight of particulate clay.

The method of the present invention may be carried out by mixing the fungicidal composition with the seed prior to planting at rates from 0.01 to 50 g per kg of seed, preferably from 0.1 to 5 g per kg, and more preferably from 0.2 to 2 g per kg. If application to the soil is desired, the compounds may be applied at rates from 1 to 1000 g of the fungicidal composition per hectare, preferably from 10 to 500 g per hectare. The higher application rates may be useful for situations involving light soils or greater rainfall or both.

The fungicidal compositions of the present invention can also be applied to seed or to soil in the form of controlled release formulations. Such controlled release formulations are well known in the art and include microparticles, microcapsules, matrix coatings, matrix granules, and the like.

The fungicide components that comprise the subject fungicidal compositions can be applied to soil, seed or plant at the same time, or they can be applied sequentially. One fungicide component can be applied to a seed and another fungicide component can be applied to the soil, so that the novel fungicidal composition is formed when the seed is planted in the soil. Moreover, one fungicidal component of the novel composition may be present in controlled release form, while another fungicidal component may be present in form that does not provide a controlled release function.

The compositions and methods of the present invention can be used for the treatment of any plant or crop. It is preferred, however, that the compositions and methods are used on an agronomic plant. Examples of such agronomic plants include, without limitation, corn, cereals, barley, rye, rice, vegetables, clovers, legumes, beans, peas, alfalfa, sugar cane, sugar beets, tobacco, cotton, rapeseed (canola), sunflower, safflower, and sorghum.

An embodiment of the present method includes a seed that possesses a transgenic event providing the plant

with some desirable trait or characteristic. One example of a desirable trait that is provided by an transgenic event is resistance to a herbicide. Another embodiment of the invention includes a seed having a transgenic event that provides resistance to a herbicide and the treatment comprises foliar application of said herbicide. The herbicide resistance is preferably to a herbicide such as glyphosate, glyphosinate, imidazilinone, or STS system. Glyphosate resistance is particularly preferred.

The subject compositions and methods may be used to control any plant fungal pathogen. A preferred embodiment, however, includes the instance where the fungal plant pathogen is a *Fusarium spp*., a *Rhizoctonia spp.,a Pseudocercosporella spp*.,or a *Gaeumannomyces spp*. It is more preferred when the fungal strain is selected from *Fusarium oxysporum, Fusarium graminearum, Rhizoctonia cerealis, Pseudocercosporella herpotrichoides,* and *Gaeumannomyces graminis.* Examples of these preferred strains of plant pathogenic fungi include *Fusarium oxysporum* f. sp. *pisi, Fusarium graminearum* (Goe 142), *Rhizoctonia cerealis, Pseudocercosporella herpotrichoides* (PH 00/809), *Gaeumannomyces graminis* var. *tritici*, strains 1084-3, UK22A, 1082-2, 1028-3, and 1024-2, *Gaeumannomyces graminis* var. *avenae* (A4), and *Gaeumannomyces graminis* var. *graminis.*

The following examples describe preferred embodiments of the invention. Other embodiments within the scope of the claims herein will be apparent to one skilled in the art from consideration of the specification or practice of the invention as disclosed herein. It is intended that the specification, together with the examples, be considered to be exemplary only, with the scope and spirit of the invention being indicated by the claims which follow the examples. In the examples all percentages are given on a weight basis unless otherwise indicated.

## EXAMPLE 1

This example shows the preparation of fungicidal compositions containing various mixtures of silthiofam, simeconazole and 1-(4-fluorophenyl)-2-(1*H*-1,2,4-triazole-1-yl)ethanone.

Silthiofam (4,5-dimethyl-N-2-propenyl-(trimethylsilyl)-3-thiophenearboxamide) was synthesized as described in U.S. Patent No. 5,486,621. The fungicide 1-(4-fluorophenyl)-2-(1*H*-1,2,4-triazole-1-yl)ethanone was used as received from SynChem, Inc., Chicago, IL. Simeconazole can be prepared as described in Itoh, H. et al., Chemical and Pharmaceutical Bulletin, 8:1148 - 1153 (2000); Tsuda, M. et al., Simeconazole (F-155), a novel systemic fungicide with broad-spectrum activity for seed treatment, The BCPC Conference - Pests & Diseases 2000; and European Patent Publication No. 0 609 099 A1.

Compositions that contained two of these three compounds were prepared by intermixing the materials in the relative amounts shown in Table 1.

Table 1: Relative amounts by weight of fungicides in combination.

| MIXTURE | SILTHIOFAM | SIMECONAZOLE | 1-(4-fluorophenyl)-2-(1*H*-1,2,4-triazole-1-yl)ethanone |
|---|---|---|---|
| A | 1 | 1 | - |
| B | 1 | 10 | - |
| C | 10 | 1 | - |
| D | 1 | - | 1 |
| E | 1 | - | 10 |
| F | 10 | - | 1 |
| G | 1 | - | 100 |
| H | 100 | - | 1 |

The combinations shown in Table 1 can be made so that the concentration of the fungicides is as high or as low as desired. It is useful, however, for the concentration of the fungicide that is present in the higher concentration to be at least about 100 mg/kg, and more desirable that it be present in a concentration of at least about 1% by weight, or higher. The compositions can be used as is, or they may be diluted by a carrier to any concentration that is useful for a particular application.

## EXAMPLE 2

This illustrates the fungicidal efficacy of several compositions of the present invention in *in vitro* tests on fungal strains that are known to cause disease in plants.

Fungal isolates of *Fusarium oxysporum* f. sp. *pisi, Fusarium graminearum* (Goe 142), *Microdochium nivale* (MUCL 11682), *Rhizoctonia cerealis, Pseudocercosporella herpotrichoides* (PH 00/809), *Gaeumannomyces graminis* var. *tritici,* strains 1084-3, UK22A, 1082-2, 1028-3, and 1024-2, *Gaeumannomyces graminis* var. *avenae* (A4) (Gga), and *Gaeumannomyces graminis* var. *graminis* (Ggg), were cultivated for 6 to 14 days on a minimal media containing 17.5 g Czapek Dox broth (DIFCO), 7.5 g Bacto agar (DIFCO), 50 μl thiamine hydrochloride (c = 1000 mg/kg, MERCK), and 50 μl biotin (c = 1000 mg/kg, MERCK), made up to one liter with sterile deionized water.

*In vitro* assays were carried out by growing the isolates mentioned above in minimal medium containing 0, 0.01, 0.1, 1, 10 and 100 mg/kg concentrations of silthiofam, simeconazole, or 1-(4-fluorophenyl)-2-(1H 1,2,4-triazole-1-yl)ethanone, and in minimal medium containing mixtures of two of the three fungicides at concentrations as shown in Table 2. Each of the fungicides was dissolved in methanol before it was added to the autoclaved minimal medium at 60°C, whereas for the control (0 mg/kg) only methanol was added.

Table 2: Concentration by weight of fungicides in minimal medium (all in mg/kg).

| MIXTURE | SILTHIOFAM | SIMECONAZOLE | 1-(4-fluorophenyl)-2-(1*H*-1,2,4-triazole-1-yl) ethanone |
|---|---|---|---|
| A | 0.01 | 0.01 | 0 |
| B | 0.01 | 0.1 | 0 |
| C | 1 | 0.1 | 0 |
| D | 100 | 0 | 100 |
| E | 0.1 | 0 | 1 |
| F | 0.1 | 0 | 0.01 |
| G | 1 | 0 | 100 |
| H | 100 | 0 | 1 |

The assay was performed by placing three mycelium plugs (diameter 5 mm) from the growing edge of the fungal cultures upside down in a triangular pattern onto the agar surface in a 55 mm-diameter petri dish (BIBBY STERILIN). This means that each petri dish contained 3 replicates for each concentration of the test compound, or the combination of compounds.

After incubation for 4 days (except that *P. herpotrichoides* cultures were incubated for 10 days), at 18°C in the dark, the diameter of the mycelium growth was measured. $EC_{50}$ values were calculated by fitting a log-logistic curve using statistical software available from SAS Institute, Inc., Cary, NC.

The fungicidal activity of each of the tested fungicides and each of the combinations of fungicides was also calculated and reported as percent activity. The average diameter of the mycelium growth from the three plugs in the plate containing the control agar was measured ($D_{Avg.Control}$), and the average diameter of the growth of the same mycelial strain in the three plugs on agar containing a fungicide, or combination of fungicides was also measured ($D_{Avg.FungicideX}$). The percent fungicidal activity was calculated as:

$$\text{Percent Activity} = (((D_{Avg.Control} - 5) - (D_{Avg.FungicideX} - 5))/ (D_{Avg.Control} - 5)) \times 100$$

where diameters are reported in millimeters and 5 represents the diameter of the plug of inoculum. Thus, if there was no growth in the sample containing the fungicide, the activity would be reported as 100%. Whereas, if the diameter of the mycelia on the agar containing the fungicide was the same as that of the mycelia on the control agar-containing no fungicide -- the percent activity would be reported as 0%. Accordingly, some amount of growth in the agar containing the fungicide, or combination of fungicides, but less than the growth on the control agar, would give a percent activity between 0 and 100%.

The determination of whether a combination of fungicides was synergistic was carried out by application of the Colby formula, as follows: (See, Colby, S. R., Weeds, 15:20 - 22 (1967). For application of the Colby formula for calculation of synergy, See, *e.g.*, publications EP 1,038,441 A2; EP 1,038,442; and WO 00/27200).

A synergistic effect exists whenever the action of an active ingredient combination is greater than the sum of the actions of the individual components. The action to be expected (E), for a given combination of two active ingredients (1 and 2) at given concentrations (p and q), is calculated as:

$$E = (X + Y) - (X*Y)/100$$

where: E = activity expected for a given combination of two ingredients, 1 and 2, where $C_1$ = p mg/kg, and $C_2$ = q mg/kg;
X = activity produced by active ingredient 1 at $C_1$ = p mg/kg; and
Y = activity produced by active ingredient 2 at $C_2$ = q mg/kg.

If the activity that is actually observed ($E_{Obs}$.) is greater than the expected activity (E), then the action of the combination is considered to be synergistic, and to be superior to what would be expected, based on the activity of each of the two active ingredients acting alone. Table 3 shows a comparison of the expected and observed activities of the combinations of the fungicides that are shown in Table 2 on the four pathogenic fungi described above.

Table 3: Expected (E) and observed (ebbs) fungicidal activities of combinations of silthiofam, simeconazole and 1-(4-fluorophenyl)-2-(1*H* 1,2,4-triazole-1-yl)ethanone on selected strains of plant pathogenic fungi.

| PATHOGEN | EXPECTED AND OBSERVED ACTIVITIES OF FUNGICIDAL MIXTURES[a] | | | | | | | | |
|---|---|---|---|---|---|---|---|---|---|
| | | A | B | C | D | E | F | G | H |
| *P. herpotrichoides* | E | **19** | **11** | **11** | **9** | **16** | **28** | **9** | **16** |
| | $E_{Obs}$ | **35** | **41** | **41** | **41** | **35** | **27** | **24** | **24** |
| *R. cerealis* | E | **15** | **64** | **67** | **66** | **0** | **0** | **52** | **35** |
| | $E_{Obs}$ | **64** | **73** | **77** | **95** | **54** | **48** | **86** | **77** |
| *M. nivale* | E | 19 | **28** | 26 | 52 | 18 | 18 | 22 | **47** |
| | $E_{Obs}$ | 0 | **29** | 0 | 42 | 0 | 0 | 0 | **58** |
| *F. graminearum* | E | **13** | **0** | **3** | 62 | **30** | **31** | n/a[b] | n/a |
| | $E_{Obs}$ | **57** | **55** | **49** | 59 | **49** | **45** | n/a | n/a |
| *Gaeumannomyces graminis v. tritici* (1084-3) | E | **12** | **26** | **27** | **90** | **25** | **24** | **24** | **90** |
| | $E_{Obs}$ | **81** | **58** | **48** | **100** | **58** | **46** | **72** | **100** |
| *Gaeumannomyces graminis v. tritici* (UK22A) | E | **11** | 59 | 61 | **83** | **7** | **7** | **26** | **79** |
| | $E_{Obs}$ | **27** | 59 | 58 | **94** | **22** | **18** | **43** | **82** |
| *Gaeumannomyces graminis v. tritici* (1082-2) | E | 0 | **2** | **2** | 94 | **0** | **0** | **0** | 94 |
| | $E_{Obs}$ | 0 | **29** | **15** | 91 | **9** | **4** | **8** | 85 |
| *Gaeumannomyces graminis v. tritici* (1028-3) | E | **48** | **71** | **89** | 100 | **91** | **91** | 84 | 100 |
| | $E_{Obs}$ | **96** | **88** | **96** | 100 | **100** | **100** | 83 | 100 |
| *Gaeumannomyces graminis v. tritici* (1024-2) | E | n/a | 100 | 100 | n/a | n/a | n/a | n/a | n/a |
| | $E_{Obs}$ | n/a | 100 | 100 | n/a | n/a | n/a | n/a | n/a |
| *Gaeumannomyces graminis v. avenae* (A4) | E | **10** | **33** | **33** | 100 | **0** | **0** | **0** | 100 |
| | $E_{Obs}$ | **32** | **58** | **66** | 82 | **24** | **42** | **26** | 76 |

(continued)

| PATHOGEN | EXPECTED AND OBSERVED ACTIVITIES OF FUNGICIDAL MIXTURES[a] | | | | | | | | |
|---|---|---|---|---|---|---|---|---|---|
| | | A | B | C | D | E | F | G | H |
| *Gaeumannomyces graminis v. graminis* (13) | E | **0** | **41** | 42 | **77** | 8 | 12 | 14 | **76** |
| | $E_{Obs}$ | **8** | **43** | 31 | **79** | 0 | 0 | 10 | **88** |
| Notes: a. Numbers in bold print denote tests showing synergistic effect.<br>b. "n/a" means that no data was available for the test. | | | | | | | | | |

Of the tests run on the activity of the 8 fungicidal mixtures on the 11 plant pathogenic fungal strains, 80 tests were successfully completed (*i.e.*, valid data was obtained). Of the 80 completed tests, 56 of them, or 70%, indicated synergistic activity. If tests in which both the expected and the observed activities were 100 are deleted, then 56 of 76, or over 73% of the tests showed synergistic activity for the combinations.

Therefore, it was concluded that the activity of the combinations of silthiofam with either simeconazole or 1-(4-fluorophenyl)-2-(1*H*-1,2,4-triazole-1-yl)ethanone was generally superior to the activity of any of the individual fungicides alone.

<u>EXAMPLE 3</u>

This illustrates the fungicidal efficacy of combinations of simeconazole, azoxystrobin and fluqinconazole in *in vitro* tests on fungal strains that are known to cause disease in plants.

Fungal isolates of *Gaeumannomyces graminis* var. *tritici,* strains UK22A, 1-3-2-1, 1065-2, and 2-1-1-6, were cultivated for 6 to 14 days on a minimal media containing 17.5 g Czapek Dox broth (DIFCO), 7.5 g Bacto agar (DIFCO), 50 µl thiamine hydrochloride (c = 1000 mg/kg, MERCK), and 50 µl biotin (c = 1000 mg/kg, MERCK), made up to one liter with sterile deionized water.

*In vitro* assays were carried out by growing the isolates mentioned above in minimal medium containing 0, 0.01, 0.1, 1, 10 and 100 mg/kg concentrations of simeconazole, azoxystrobin (available from ZENECA LIMITED LIABILITY COMPANY UNITED KINGDOM 15 Stanhope Gate London ENGLAND W1Y 6LN, under the trade name AMISTAR®), or fluquinconazole (available from Aventis Crop Science under the trade name JOCKEY), and in minimal medium containing mixtures of two of the three fungicides at concentrations as shown in Table 4. Each of the fungicides was dissolved in methanol before it was added to the autoclaved minimal medium at 60°C, whereas for the control.(0 mg/kg) only methanol was added.

Table 4: Concentration by weight of fungicides in minimal medium (all in mg/kg).

| MIXTURE | SIMECONAZOLE | AZOXYSTROBIN | FLUQUINCONAZOLE |
|---|---|---|---|
| I | 1 | 1 | 0 |
| J | 0.1 | 1 | 0 |
| K | 1 | 10 | 0 |
| L | 0.1 | 10 | 0 |
| M | 1 | 0.1 | 0 |
| N | 0 | 1 | 1 |
| O | 0 | 10 | 1 |
| P | 0 | 100 | 1 |
| Q | 0 | 10 | 0.1 |
| R | 0.1 | 0 | 0.1 |
| S | 1 | 0 | 1 |
| T | 0.1 | 0 | 1 |
| U | 1 | 0 | 0.1 |

The assay was performed as described above in Example 2, and the data was obtained and analyzed in the same fashion. The expected and observed activities of the various combinations tested is shown in Table 5.

Table 5: Expected (E) and observed ($E_{obs}$) fungicidal activities of combinations of simeconazole, azoxystrobin and fluquinconazole on selected strains of plant pathogenic fungi.

| PATHOGEN | EXPECTED AND OBSERVED ACTIVITIES OF FUNGICIDAL MIXTURES[a] | | | | | | | |
|---|---|---|---|---|---|---|---|---|
| | | I | J | K | L | M | N | O |
| *Gaeumannomyces graminis v. tritici* (UK22A) | E | 100 | **77.05** | o/r | o/r | o/r | o/r | o/r |
| | $E_{Obs}$ | 99.04 | **79.87** | | | | | |
| *Gaeumannomyces graminis v. tritici* (1-3-2-1) | E | o/r | **65.87** | o/r | **97.88** | o/r | **95.34** | **99.71** |
| | $E_{Obs}$ | | **88.98** | | **100** | | **100** | **100** |
| *Gaeumannomyces graminis v. tritici* (1065-2) | E | o/r | **98.09** | o/r | o/r | o/r | **99.76** | o/r |
| | $E_{Obs}$ | | **100** | | | | **100** | |
| *Gaeumannomyces graminis v. tritici* (2-1-1-6) | E | 99.49 | **77.16** | **99.99** | **99.61** | 99.2 | **97.67** | **99.96** |
| | $E_{Obs}$ | 99.10 | **87.61** | **100** | **100** | 99.02 | **99.35** | **100** |

Notes: a. Numbers in bold print denote tests showing synergistic effect.

b. "o/r" means that both expected and observed activities were 100, thus no meaningful information on synergy could be obtained from the test.

Table 5: (Continued)

| PATHOGEN | EXPECTED AND OBSERVED ACTIVITIES OF FUNGICIDAL MIXTURES[a] | | | | | | |
|---|---|---|---|---|---|---|---|
| | | P | Q | R | S | T | U |
| *Gaeumannomyces graminis v. tritici* (UK22A) | E | o/r | o/r | **81.88** | 100 | 100 | o/r |
| | $E_{Obs}$ | | | **94.25** | 96.15 | 97.12 | |

| PATHOGEN | EXPECTED AND OBSERVED ACTIVITIES OF FUNGICIDAL MIXTURES[a] | | | | | | |
|---|---|---|---|---|---|---|---|
| | | P | Q | R | S | T | U |
| Gaeumannomyces graminis v. tritici (1-3-2-1) | E | o/r | **99.33** | 87.22 | o/r | **94.49** | o/r |
| | $E_{Obs}$ | | **100** | 77.96 | | **100** | |
| Gaeumannomyces graminis v. tritici (1065-2) | E | o/r | o/r | **71.27** | o/r | **97.73** | o/r |
| | $E_{Obs}$ | | | **90.14** | | **100** | |
| Gaeumannomyces graminis v. tritici (2-1-1-6) | E | o/r | **99.52** | **72.91** | 99.95 | **97.73** | 99.39 |
| | $E_{Obs}$ | | **100** | **88.62** | 99.04 | **99.28** | 98.36 |

Notes: a. Numbers in bold print denote tests showing synergistic effect.

b. "o/r" means that both expected and observed activities were 100, thus no meaningful information on synergy could be obtained from the test.

Of the tests run on the activity of the 13 fungicidal mixtures on the 4 plant pathogenic fungal strains, 28 tests were successfully completed (*i.e.*, data providing evidence of the presence or absence of synergy was obtained). Of the 28 completed tests, 20 of them, or 71 %, indicated synergistic activity.

Therefore, it was concluded that the activity of the combinations of simeconazole with either azoxystrobin or fluquinconazole, and the combination of azoxystrobin with fluqiniconazole was generally superior to the activity of any of the individual fungicides alone.

EXAMPLE 4

This illustrates the efficacy of combinations of silthiofam and simeconazole in *in planta* tests wherein wheat plants were challenged with four different strains of plant pathogenic fungi.

Three different efficacy tests were carried out in which wheat seeds that had been treated with various combinations of silthiofam and simeconazole were sprouted in the presence of four different strains of fungi that were known pathogens for wheat.

Seed Treatment:

Seed dressing with fungicidal active material was carried out in a small glass vial using 10 g of wheat seeds per treatment. The fungicide (silthiofam and/or simeconazole) was dissolved in methanol. A total of 80 μl of the fungicidal solution was applied to the upper wall of each glass vial, and the vial was carefully shaken for approximately 3 minutes to distribute the fungicide(s) among the seeds. The concentration of the fungicide(s) in the methanol was calculated so that 80 μl of the fungicidal solution would provide the desired dosage of the fungicide(s) to the seed.

Assay to determine efficacy of silthiofam/simeconazole combination against *Gaeumannomyces graminis* var. *tritici* (Ggt):

*In planta* Take-All assays were carried out using a tube (container) assay technique. Wheat seeds were challenged with two different biotypes of Ggt strains -- Ggt 1089-3 and Ggt 1065-2.
The soil used in the test was infested with Ggt oat inoculum (3.5% w/w), which had been produced by adding a 5 day-old liquid culture of the desired Ggt strain to autoclaved oats. After an incubation period of 3 weeks at room temperature, the inoculum was dried.
Plastic container tubes were filled with 20 ml of vermiculite, followed by 50 ml infested soil. Three seeds of the winter wheat variety Rialto were placed on top of the soil and covered with 15 ml of additional infested soil and 5 ml of vermiculite. The seeds were either untreated controls, or had received a seed treatment according to the protocol indicated in Table 6. Seven replicate tubes were used for each treatment.
The tubes were placed in a growth chamber at 18°/15°C (day/night) using a 16 hour photoperiod. Each container was watered with 10 ml every second day for the first week and with 10 ml daily during the remaining weeks of the test. After three weeks, plant seedlings were assessed for Take-All disease severity using the Take-All Index described below.
To estimate disease severity, plants were sacrificed and roots were washed thoroughly and classified into one of five different categories as follows:

| CATEGORY | PERCENT OF ROOTS THAT ARE INFECTED |
|---|---|
| 0 | 0% |
| 1 | 1 - 10% |
| 2 | 11 - 30% |
| 3 | 31 - 60% |
| 4 | 61 - 100% |

The Take-All Index (TAI) was calculated as:

$$TAI = (0a + 10b + 30c + 60d + 100e)/n$$

where "a, b, c, d, and e" represent the number of plants in each of the categories 0 through 4, respectively, and "n" is the total number of plants examined (*i.e.*, n = a+ b + c + d + e). Fungicidal activity was calculated as TAI, of the control sample minus TAI of the treated sample.
A determination of whether a synergistic effect existed for the tested combination was made by substituting fungicidal activities into the Colby formula as described in Example 2. The expected and observed activities for each of the fungicidal combinations tested is shown in Table 6.

Table 6: Fungicidal wheat seed treatment with silthiofam and simeconazole for seeds challenged with Ggt 1089-3.

| TREATMENT NUMBER | SIL THIOFAM (g/kg of seed) | SIMECONAZOLE (g/kg of seed) | EXPECTED ACTIVITY[a] | OBSERVED ACTIVITY |
|---|---|---|---|---|
| 1 | 12.5 | 25 | 50.9 | 29 |
| 2 | 25 | 25 | 50.9 | 44.2 |
| 3 | 12.5 | 50 | **14.1** | **35.7** |
| 4 | 25 | 50 | **19.3** | **60.7** |
| 5 | 12.5 | 100 | 33.4 | 29.8 |
| 6 | 25 | 100 | **31.3** | **48** |

Notes:
a. Bolded numbers indicate synergistic activity.

A similar test was carried out for G. *graminis* (Ggt) 1065-2, except with slightly different fungicidal concentrations, as shown in Table 7. The test assay and the activities were calculated the same as described above.

Table 7: Fungicidal wheat seed treatment with silthiofam and simeconazole for seeds challenged with Ggt 1065-2.

| TREATMENT NUMBER | SILTHIOFAM (g/kg of seed) | SIMECONAZOLE (g/kg of seed) | EXPECTED ACTIVITY | OBSERVED ACTIVITY |
|---|---|---|---|---|
| 1 | 6.25 | 25 | 90.8 | 88.1 |
| 2 | 12.5 | 25 | 90.3 | 84.6 |
| 3 | 6.25 | 50 | 91.1 | 78.2 |
| 4 | 12.5 | 50 | 90.6 | 85.7 |

Assay to determine efficacy of silthiofam/simeconazole combination against *Pseudocercosporella herpotrichoides* (Ph):

*In planta* eyespot assays were carried out using a tube (container) assay in which wheat seeds were challenged with a strain of W-type *P. herpotrichoides*. Infested soil was prepared as described above and comprised a 4:1 w/w mixture of soil and chopped up infected oat grains. Plastic container tubes each received 20 ml of vermiculite followed by 50 ml non-infected soil. Three seeds of winter wheat of the Rialto variety, untreated or treated according to the protocol shown below in Table 8, were placed on top of the soil and covered with 15 ml of infested soil, followed by 5 ml of vermiculite. Ten replicate tubes were used for each treatment.

The tubes were placed in a growth chamber at. 18°C/15°C (day/night) using a 16 hour photoperiod. Each container received 10 ml of water every second day during the first week, and 10 ml daily thereafter. At 35 days after sowing the seedlings were assessed for eyespot disease index and disease severity using the assessment key and formula described below.

To estimate disease severity, plants were removed from soil, the stem of the plant was washed thoroughly, and the disease symptoms on the stem base were classified into the following categories:

| CATEGORY | DESCRIPTION |
|---|---|
| 0 | No disease symptoms; healthy |
| 1 | Coleoptile shows necrotic lesions caused by eyespot |
| 2 | $2^{nd}$ leaf shows necrotic lesions caused by eyespot |
| 3 | $3^{rd}$ leaf shows necrotic lesions caused by eyespot |

Eyespot disease severity (EDS) was calculated as:

$$EDS = (0a + 20b + 50c + 100d)/n$$

where, a, b, c and d represent the number of plants in each of the categories 0 through 3, respectively, and n is the total number of plants examined (*i.e.*, n = a + b + c + d). Fungicidal activity was calculated as EDS of the control sample minus EDS of the treated sample.

A determination of whether a synergistic effect existed for the tested combination was made by substituting fungicidal activities into the Colby formula as described in Example 2. The expected and observed activities for each of the fungicidal combinations tested is shown in Table 8.

Table 8: Fungicidal wheat seed treatment with silthiofam and simeconazole for seeds challenged with W-type *P. herpotrichoides.*

| TREATMENT NUMBER | SILTHIOFAM (g/kg of seed) | SIMECONAZOLE (g/kg of seed) | EXPECTED ACTIVITY[a] | OBSERVED ACTIVITY |
|---|---|---|---|---|
| 1 | 12.5 | 25 | 40.9 | 0 |
| 2 | 25 | 25 | **40.9** | **59.1** |
| 3 | 12.5 | 50 | **35.1** | **36** |
| 4 | 25 | 50 | **35.1** | **63.8** |

(continued)

| TREATMENT NUMBER | SILTHIOFAM (g/kg of seed) | SIMECONAZOLE (g/kg of seed) | EXPECTED ACTIVITY[a] | OBSERVED ACTIVITY |
|---|---|---|---|---|
| 5 | 12.5 | 100 | **62.7** | **71.9** |
| 6 | 25 | 100 | **62.7** | **77.4** |
| Notes:<br>a. Bolded numbers indicate synergistic activity. | | | | |

Assay to determine efficacy of silthiofam/simeconazole combination against *Microdochimum nivales* (Mn):

*In planta* eyespot assays were carried out using a tube (container) assay in which wheat seeds which were heavily infested with *M. nivale* (84%) and *Fusarium roseum* (9%) were used.

Plastic container tubes each received 20 ml of vermiculite followed by 50 ml non-infected soil. Three seeds of winter wheat of the Rialto variety, untreated or treated according to the protocol shown below in Table 7, were placed on top of the soil and covered with 15 ml of infested soil, followed by 5 ml of vermiculite. Seven replicate tubes were used for each treatment.

The tubes were placed in a growth chamber at 16°C/12°C (day/night) using a 12 hour photoperiod. Each container received 10 ml of water every second day during the first week, and 10 ml daily thereafter. At 35 days after sowing the seedlings were assessed for disease index and disease severity using the assessment key and formula described below.

To estimate disease severity, plants were removed from soil, the stem of the plant was washed thoroughly, and the disease symptoms on the stem base were classified into the following categories:

| CATEGORY | DESCRIPTION |
|---|---|
| 0 | No disease symptoms; healthy |
| 1 | Low *Fusarium* (browing) root rot symptoms |
| 2 | Medium *Fusarium* (browing) root rot symptoms |
| 3 | Heavy *Fusarium* (browing) root rot symptoms |

Disease severity (DS) was calculated as:

$$DS = (0a + 20b + 50c + 100d)/n$$

where, a, b, c and d represent the number of plants in each of the categories 0 through 3, respectively, and n is the total number of plants examined (*i.e.*, n = a + b + c + d). Fungicidal activity was calculated as DS of the control sample minus DS of the treated sample.

A determination of whether a synergistic effect existed for the tested combination was made by substituting fungicidal activities into the Colby formula as described in Example 2. The expected and observed activities for each of the fungicidal combinations tested is shown in Table 9.

Table 9: Fungicidal wheat seed treatment with silthiofam and simeconazole for seeds challenged with *M. nivale.*

| TREATMENT NUMBER | SILTHIOFAM (g/kg of seed) | SIMECONAZOLE (g/kg of seed) | EXPECTED ACTIVITY[a] | OBSERVED ACTIVITY |
|---|---|---|---|---|
| 1 | 25 | 25 | 33.6 | 0 |
| 2 | 25 | 50 | 9 | 0 |

All references cited in this specification, including without limitation all papers, publications, patents, patent applications, presentations, texts, reports, manuscripts, brochures, books, internet postings, journal articles, periodicals, and the like, are hereby incorporated by reference into this specification in their entireties. The discussion of the references herein is intended merely to summarize the assertions made by their authors and no admission is made that any reference

constitutes prior art. Applicants reserve the right to challenge the accuracy and pertinency of the cited references.

In view of the above, it will be seen that the several advantages of the invention are achieved and other advantageous results obtained.

As various changes could be made in the above methods and compositions without departing from the scope of the invention, it is intended that all matter contained in the above description shall be interpreted as illustrative and not in a limiting sense.

## Claims

**1.** A fungicidal composition comprising a first fungicide having the formula:

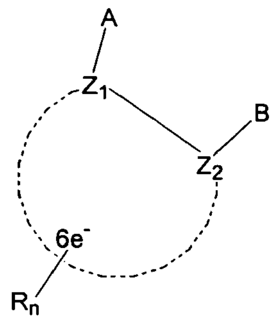

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, --C(O)-$SR_3$, --NH--C(X)$R_4$, and --C(=$NR_3$)-$XR_7$ ;
B is --$W_m$ --Q$(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_p$ $H_{(2-p)}$ --; or when Q is C, W is selected from --$C(R_3)_p$ $H_{(2-p)}$ --,-$N(R_3)_m$ $H_{(1-m)}$ --, --$S(O)_p$ --, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$;
or an agronomic salt thereof; and

a second fungicide comprisingö

a triazole fungicide that is selected from the group consisting of amitrol, azaconazole, bitertanol, bromuconazole, climbazole, clotrimazole, cyproconazole, diclobutrazol, diniconazole, diniconazole-M, epoxiconazole, etaconazole, fenbuconazole, fluotrimazole, flusilazole, flutriafol, furconazole, furconazole-cis, hexaconazole, imibenconazole, ipconazole, metconazole, myclobutanil, paclobutrazol, penconazole, propiconazole, quinconazole, tetraconazole, triadimefon, triadimenol, triazbutil, triticonazole, and mixtures thereof, and
a strobilurin-type fungicide that is selected from the group consisting of azoxystrobin, dimoxystrobin, famoxadone, kresoxim-methyl, metominostrobin, picoxystrobin, pyraclostrobin, trifloxystrobin and mixtures thereof;

wherein the composition contains the first fungicide and the second fungicide in a ratio by weight of from 1:100 to 100:1.

**2.** The composition of claim 1, wherein
$Z_1$ and $Z_2$ are C and are part of an aromatic ring which is thiophene;
A is selected from --C(X)-amine, --C(O)-$SR_3$, --NH--C(X)$R_4$, and --C(=$NR_3$)-$XR_7$ ;
B is --$W_m$ --$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_p$ $H_{(2-p)}$ --; or when Q is C, W is selected from --$C(R_3)_p$ $H_{(2-p)}$ --,-$N(R_3)_m$ $H_{(1-m)}$ --, --$S(O)_p$ --, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino, and further when Q is C, then two $R_2$ groups may be combined to form a cycloalkyl group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$;
or an agronomic salt thereof.

**3.** The composition of claim 1, wherein
$Z_1$ and $Z_2$ are C and are part of an aromatic ring which is thiophene;
A is selected from --C(X)-amine, wherein the amine is substituted with a first and a second amine substituent or with an alkylaminocarbonyl and a hydrogen, --C(O)--$SR_3$, --NH--C(X)$R_4$, and --C(=$NR_3$)-$XR_7$ ;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$ --$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_p$ $H_{(2-p)}$--; or when Q is C, W is selected from --$C(R_3)_p$ $H_{(2-p)}$ --,-$N(R_3)_m$ $H_{(1-m)}$--, --$S(O)_p$--, and --O--;
X is O or S;
n is 2;
m is 0 or 1;
p is 0, 1, or 2;
wherein two R groups are combined to form a nonheterocyclic ring fused with the thiophene ring, which is not a benzothiophene other than a tetrahydrobenzothiophene, said two R groups being selected from the group consisting of $C_1$ - $C_4$ alkyl, alkenyl, $C_3$ - $C_6$ cycloalkyl and cycloalkenyl, each optionally substituted with hydroxy, thio, phenyl, $C_1$ - $C_4$ alkoxy, alkylthio, alkylsulfinyl, or alkylsufonyl;
each $R_2$ is independently selected from alkyl, alkenyl, alkynyl, cycloalkyl, cycloalkenyl and phenyl, each optionally substituted with $R_4$ or halogen; and wherein when Q is C, $R_2$ may also be selected from halo, alkoxy, alkylthio, alkylamino, and dialkylamino; and further when Q is C, then two $R_2$ groups may be combined to form a cycloalkyl group with Q;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof

**4.** The composition of claim 1, wherein
$Z_1$ and $Z_2$ are C and are part of an aromatic ring which is thiophene;
A is --C(X)-amine wherein the amine is an N-bonded heterocyclic compound chosen from the group consisting of morpholine, piperazine, piperidine, and pyrrolidine, each optionally substituted with $C_3$ - $C_6$ alkyl groups;
B is --$W_m$ --$Q(R_2)_3$ or selected from o-tolyl, 1-naphthyl, 2-naphthyl, and 9-phenanthryl, each optionally substituted with halogen or $R_4$ ;
Q is C or Si;
W is --$C(R_3)_p$ $H_{(2-p)}$ --; or when Q is C, W is selected from --$C(R_3)_p$ $H_{(2-p)}$ --,-$N(R_3)_m$ $H_{(1-m)}$ --, --$S(O)_p$ --, and --O--;
X is O;
n is 2;
m is 0 or 1;
p is 0, 1, or 2;
wherein the two R groups are alkenyl groups and are combined to form a fused ring with the thiophene ring which is benzothiophene; wherein the alkenyl groups are optionally substituted with halo, hydroxy, thio, amino, nitro, cyano, formyl, phenyl, $C_2$ - $C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
each $R_2$ is independently selected from alkyl, alkenyl, alkynyl, cycloalkyl, cycloalkenyl, and phenyl, each optionally substituted with $R_4$ or halogen; and wherein when Q is C, $R_2$ may also be selected from halo, alkoxy, alkylthio, alkylamino, and dialkylamino; or wherein two $R_2$ groups may be combined to form a cyclo group with Q;
$R_3$ is Ci-$C_4$ alkyl; and
$R_4$ is $C_1$-$C_4$ alkyl, haloalkyl, alkoxy, alkylthio, alkylamino, or dialkylamino;
or an agronomic salt thereof

**5.** The composition of claim 1, wherein
$Z_1$ and $Z_2$ are C and are part of an aromatic ring which is benzothiophene; and
A is selected from --C(X)-amine wherein the amine is an unsubstituted, monosubstituted or disubstituted nonheterocyclic amino radical, --C(O)-$SR_3$, --NH-C(X)$R_4$, and --C(=$NR_3$)--$XR_7$ ;
B is --$W_m$ --$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_p$ $H_{(2-p)}$--; or when Q is C, W is selected from --$C(R_3)_p$ $H_{(2-p)}$ --,-$N(R_3)_m$ $H_{(1-m)}$--, --$S(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;

wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof

**6.** The composition of claim 1, wherein
$Z_1$ and $Z_2$ are C or N and are part of an aromatic ring which is furan; and
A is selected from --C(X)-amine wherein the amine is substituted with a first and a second amine substituent or with an alkylaminocarbonyl and a hydrogen, --C(O)-$SR_3$, --NH--C(X)$R_4$, and --C(=$NR_3$)--$XR_7$ ;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$ --$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_p$ $H_{(2-p)}$ --; or when Q is C, W is selected from --$C(R_3)_p$ $H_{(2-p)}$ --,-$N(R_3)_m$ $H_{(1-m)}$ --, --$S(Q)_p$ --, and --O--;
X is O or S;
n is 0, 1, or 2;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio,

alkylamino, and dialkylamino;
wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof

**7.** The composition of claim 1, wherein
$Z_1$ and $Z_2$ are C and are part of an aromatic ring which is benzothiophene; and
A is selected from --C(X)-amine wherein the amine is an unsubstituted, monosubstituted or disubstituted nonheterocyclic amino radical, --C(O)-$SR_3$, --NH-C(X)$R_4$, and --C(=$NR_3$)--$XR_7$ ;
B is --$W_m$ --$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_p$ $H_{(2-p)}$ --; or when Q is C, W is selected from --$C(R_3)_p$ $H_{(2-p)}$ --,-$N(R_3)_m$ $H_{(1-m)}$ --, --$S(O)_p$ --, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;

wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof.

**8.** The composition of claim 1, wherein
$Z_1$ and $Z_2$ are C and are part of an aromatic ring which is furan; and
A is selected from --C(X)-amine wherein the amine is substituted with a first and a second amine substituent or with an alkylaminocarbonyl and a hydrogen, --C(O)-$SR_3$, --NH--C(X)$R_4$, and --C(=$NR_3$)--$XR_7$;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$ --$Q(R_2)_3$ or selected from o-tolyl, 1-naphthyl, 2-naphthyl, and 9-phenanthryl, each optionally substituted with halogen or $R_4$ ;

Q is C, Si, Ge, or Sn;
W is --$C(R_3)_pH_{(2-p)}$--; or when Q is C, W is selected from --$C(R_3)_pH_{(2-p)}$--,-$N(R_3)_mH_{(1-m)}$--, --$S(O)_p$--, and --O--;
X is 0 or S;
n is 0, 1, or 2;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof.

**9.** The composition of claim 1, wherein
$Z_1$ and $Z_2$ are C and are part of an aromatic ring which is pyridine; and
A is selected from the group consisting of --C(O)-$SR_3$, --NH--C(X)$R_4$, and-C(=$NR_3$)--$XR_7$ and --C(X)-amine wherein the amine is substituted with alkylaminocarbonyl and a hydrogen or wherein the amine has a first and a second amine substituent;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_pH_{(2-p)}$--,-$N(R_3)_mH_{(1-m)}$--, --$S(O)_p$--, and --O--;
X is 0 or S;
n is 0, 1, or 2;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;

c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino; or wherein two $R_2$ groups may be combined to form a cyclo group with Q which is 1-methylcyclopropyl, 1-methylcyclopentyl, or 1-methylcyclohexyl;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof.

**10.** The composition of claim 1, wherein
$Z_1$ and $Z_2$ are C and are part of an aromatic ring which is benzene; and
A is selected from the group consisting of --C(X)-amine wherein the amine is substituted with a first and a second amine substituent or with an alkylaminocarbonyl and a hydrogen; --C(O)-$SR_3$, --NH--C(X)$R_4$, and --C(=$NR_3$)--$XR_7$;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$--$Q(R_2)_3$ or selected from o-tolyl, 1-naphthyl, 2-naphthyl, and 9-phenanthryl, each optionally substituted with halogen or $R_4$ ;
Q is Si, Ge, or Sn;
W is --$C(R_3)_pH_{(2-p)}$--;
X is 0 or S;
n is 0, 1, 2 or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

each $R_2$ is independently selected from alkyl, alkenyl, alkynyl, cycloalkyl, cycloalkenyl and phenyl, each optionally substituted with $R_4$ or halogen;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof.

**11.** The composition of claim 1, wherein

$Z_1$ and $Z_2$ are C and are part of an aromatic ring which is furan; and
A is selected from --C(X)-amine wherein the amine is substituted with a first and a second amine substituent or with an alkylaminocarbonyl and a hydrogen, --C(O)-$SR_3$, --NH--C(X)$R_4$, and --C(=$NR_3$)--$XR_7$;
the first amine substituent is selected from the group consisting of $C_1$ - $C_{10}$ straight or branched alkyl, alkenyl, or alkynyl groups or mixtures thereof optionally substituted with one or more halogen, hydroxy, alkoxy, alkylthio, nitrile, alkylsulfonate, haloalkylsulfonate, phenyl, a 5-membered heteroaryl, $C_3$ - $C_6$ cycloalkyl and $C_5$ - $C_6$ cycloalkylkenyl; phenyl optionally substituted with one or more $C_1$ - $C_4$ straight or branched alkyl, alkenyl, or alkynyl groups or mixtures thereof, cycloalkyl, cycloalkenyl, haloalkyl, alkoxy and nitro; $C_3$ - $C_6$ cycloalkyl, $C_5$ - $C_6$ cycloalkenyl, alkoxy, alkenoxy, alkynoxy, dialkylamino, and alkylthio;
and the second amine substituent is selected from the group consisting of hydrogen; $C_1$ - $C_6$ straight or branched alkyl, alkenyl, or alkynyl groups or mixtures thereof optionally substituted with one or more halogen, hydroxy, alkylcarbonyl, haloalkylcarbonyl, alkoxycarbonyl, and dialkylphosphonyl;
B is --$W_m$--Q$(R_2)_3$ or selected from o-tolyl, 1-naphthyl, 2-naphthyl, and 9-phenanthryl, each optionally substituted with halogen or $R_4$;
Q is C, Si, Ge, or Sn;
W is --$C(R_3)_pH_{(2-p)}$--; or when Q is C, W is selected from --$C(R_3)_pH_{(2-p)}$--,-$N(R_3)_mH_{(1-m)}$--, --$S(O)_p$--, and --O--;
X is 0 or S;
n is 2;
m is 0 or 1;
p is 0, 1, or 2;
wherein the two R groups are combined to form a nonheterocyclic ring fused to said furan ring which is not benzofuran when A is --C(X)--amine, B is --Wm(Q)--$(R_2)_3$, and Q is C or Si, said R groups being selected from the group consisting of $C_1$ - $C_4$ alkyl, alkenyl, $C_3$ - $C_6$ cycloalkyl and cycloalkenyl, each optionally substituted with hydroxy, thio, phenyl, $C_1$ - $C_4$ alkoxy, alkylthio, alkylsulfinyl, or alkylsulfonyl; and
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino; wherein further when Q is C, then two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino; and
$R_7$ is $C_1$-$C_4$ alkyl, haloalkyl, or phenyl, optionally substituted with halo, nitro, or $R_4$;
or an agronomic salt thereof.

**12.** The composition of claim 1, wherein $Z_1$ and $Z_2$ are C and are part of a thiophene ring.

**13.** The composition of claim 12, wherein A is -C(O)-amine, wherein the amino radical is substituted with one or two groups selected from hydrogen; hydroxy; alkyl, alkenyl, and alkynyl, which may be straight or branched chain or cyclic; alkoxyalkyl; haloalkyl; hydroxyalkyl; alkylthio; alkylthioalkyl; alkylcarbonyl; alkoxycarbonyl; aminocarbonyl; alkylaminocarbonyl; cyanoalkyl; mono-or dialkylamino; phenyl, phenylalkyl or phenylalkenyl, each optionally substituted with one or more $C_1$ - $C_4$ alkyl, alkoxy, haloalkyl, $C_3$ - $C_6$ cycloalkyl, halo, or nitro groups; and $C_1$ - $C_4$ alkyl or alkenyl substituted with pyrimidinyl, thienyl, or furanyl; and wherein the amino radical may be a N-bonded heterocycle selected from morpholine, piperazine, piperidine, pyrrole, pyrrolidine, imidazole, and triazoles, each optionally substituted with $C_1$ - $C_6$ alkyl groups.

**14.** The composition of claim 13, wherein in -$W_m$-, m is 0.

**15.** The composition of claim 14, wherein Q is Si.

**16.** The composition of claim 15, wherein each $R_2$ is $C_1$ - $C_4$ alkyl or haloalkyl.

**17.** The composition of claim 16, wherein each $R_2$ is methyl.

**18.** The composition of claim 17, wherein A is alkylaminocarbonyl or dialkylaminocarbonyl.

**19.** The composition of claim 1, wherein the first fungicide comprises 4,5-dimethyl-N-2-propenyl-2-(trimethylsilyl)-3-thiophenecarboxamide.

**20.** The composition of claim 1, wherein the first fungicide comprises a compound having the formula:

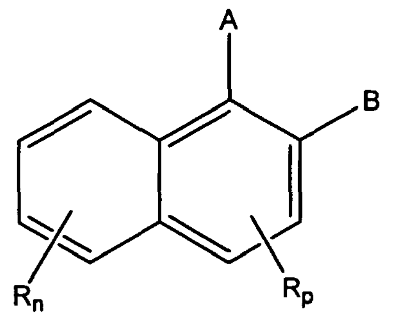

(a)

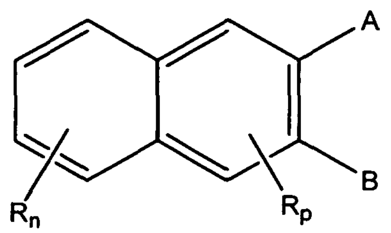

(b)

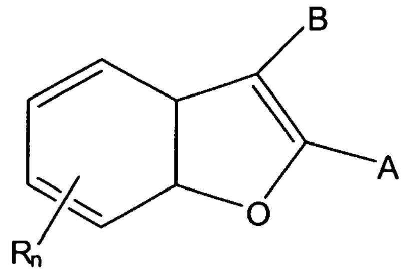

(c)

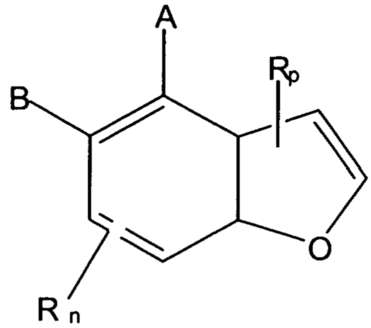

(d)

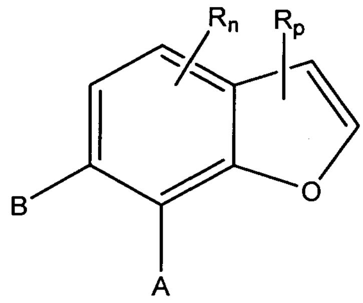

(e)

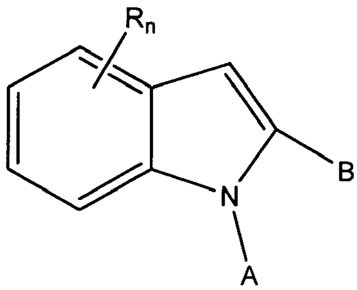

(f)

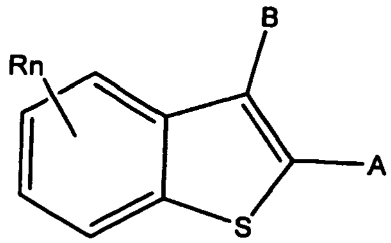

(g)

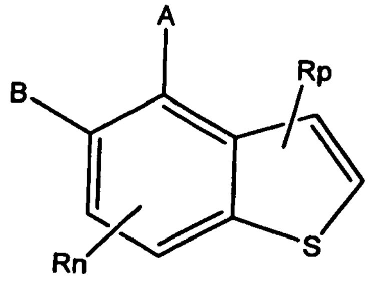

(h)

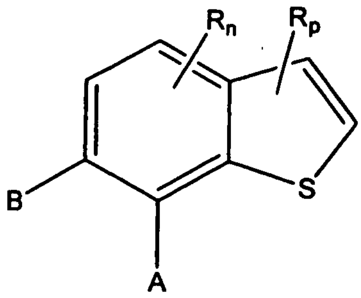

(i)

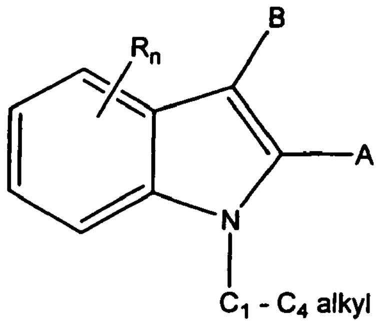

(j)

where A is --C(X)-amine; B is -$W_m$--$Q(R_2)_3$; and A can be B when B is A except when the formula is f), then Q cannot be Si;
Q is C or Si;
W is --$C(R_3)_pH_{(2-p)}$--; or when Q is C, W is selected from --$C(R_3)_pH_{(2-p)}$--,-$N(R_3)_mH_{(1-m)}$--, --$S(O)_p$--, and --O--;
X is 0 or S;
m is 0 or 1, provided that m is 0 when Q is Si;
n is 0, 1, 2, or 3;
p is 0, 1 or 2, and n plus p is equal to or less than 3;
each R is independently selected from

a) halo, formyl, cyano, amino, nitro, thiocyanato, isothiocyanato, trimethylsilyl, and hydroxy;
b) $C_1$ -$C_4$ alkyl, alkenyl, alkynyl, $C_3$ -$C_6$ cycloalkyl, and cycloalkenyl, each optionally substituted with halo, hydroxy, thio, amino, nitro, cyano, formyl, phenyl, $C_1$ - $C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$ -$C_4$ alkyl, alkenyl, alkynyl, alkoxy, alkylthio, alkylamino, dialkylamino, haloalkyl, and haloalkenyl;
d) $C_1$ -$C_4$ alkoxy, alkenoxy, alkynoxy, $C_3$ -$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo; each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino; wherein two $R_2$ groups may be combined to form a cyclo group with Q; $R_4$ is $C_1$ -$C_4$ alkyl, haloalkyl, alkoxy, alkylthio, alkylamino, or dialkylamino;

or an agronomic salt thereof.

**21.** The fungicidal composition according to claim 1, wherein the first fungicide comprises a fungicide having the formula:

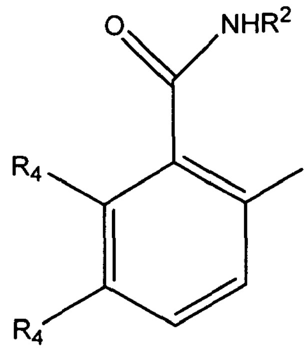

wherein $R^2$ is ethyl, iso-propyl, propyl or allyl;
B is $N(CH_3)_{1-n}H_n$ $R^5$ or $OR^6$ wherein n is 0 or 1, $R^5$ is $(CH_3)_m$ $(CH_3CH_2)_{3-m}$ C, 1-methyl-1-cyclopentyl, 1-methyl-1-cyclohexyl or 2,3-dimethyl-2-butyl wherein m is 0, 1, 2 or 3 and $R^6$ is independently $R^5$, or 2,3,3-trimethyl-2-butyl;
$R^3$ is H or independently $R^4$; and
$R^4$ is halo or $CH_3$;
with the proviso that when B is $N(CH_3)_{1-n}H_n$ $R^5$, if $R^3$ is H and $R^5$ is 1-methyl-1-cyclohexyl or $(CH_3)_m$ $(CH_2CH_3)_{3-m}$ C, where m is 0 or 3, or if $R^3$ is halo and $R^2$ is $(CH_3)_m$ $(CH_3\ CH_2)_{3-m}$ C, where m is 3, then $R^2$ cannot be ethyl; and with the proviso that when B is $OR^6$ then m is equal to or less than 2, and if $R^3$ is H or halo and $R^2$ is ethyl or isopropyl, then $R^6$ is $(CH_3)_m$ $(CH_3CH_2)_{3-m}$ C where m is 1;
or an agronomic salt thereof.

**22.** A fungicidal composition comprising a first fungicide having the formula:

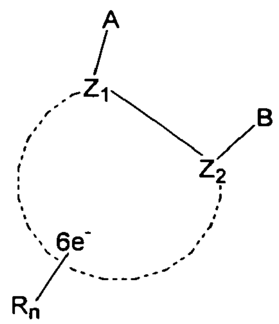

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, --C(O)-$SR_3$, --NH--C(X)$R_4$, and --C(=$NR_3$)-$XR_7$;
B is --$W_m$--Q$(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --C$(R_3)_pH_{(2-p)}$--; or when Q is C, W is selected from --C$(R_3)_pH_{(2-p)}$--,-N$(R_3)_mH_{(1-m)}$--, --S$(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;

c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$;
or an agronomic salt thereof; and
a second fungicide which comprises a compound having the formula:

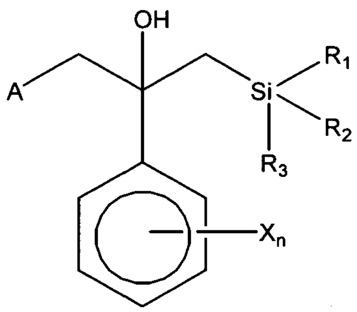

wherein:

A is a 1,2,4-triazol-1-yl group or an imidazol-1-yl-group;
n is 0, 1, 2, or 3, and when n is 2 or 3, the groups represented by X may be the same or different;
X is a halogen atom, a phenyl group, an alkyl group having from 1 to 6 carbon atoms, a haloalkyl group having from 1 to 6 carbon atoms and having at least one halogen atom, an alkoxy group having from 1 to 6 carbon atoms, or a haloalkoxy group having from 1 to 6 carbon atoms and having at least one halogen atom, or $(X)_n$ is an alkylenedioxy group having 1 or 2 carbon atoms;
$R_1$ is an alkyl group having from 1 to 4 carbon atoms or a phenyl group which is unsubstituted or is substituted by at least one halogen atom; and
$R_2$ and $R_3$ are the same or different and each is an alkyl group having from 1 to 4 carbon atoms;

or a salt thereof.

**23.** A fungicidal composition comprising a first fungicide having the formula:

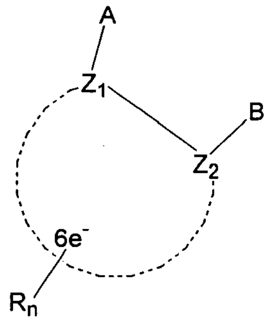

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, --C(O)-$SR_3$, --NH--C(X)$R_4$, and --C(=$NR_3$)-$XR_7$;
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_pH_{(2-p)}$--,-$N(R_3)_mH_{(1-m)}$--, --$S(O)_p$--, and --O--;
X is 0 or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$;
or an agronomic salt thereof; and
a second fungicide which comprises a compound having the general formula:

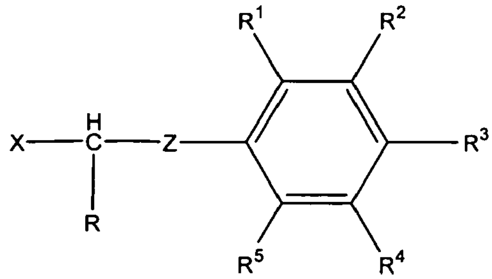

wherein R is hydrogen or an optionally substituted hydrocarbyl group, Z is

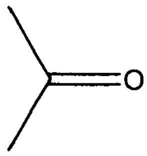

each of the groups $R^1$ to $R^5$, which may be the same or different, in a hydrogen or halogen atom, an optionally substituted hydrocarbyl or hydrocarbyloxy group, or a nitro or amino group, and X is a group of general formula (A), (A') or (B);

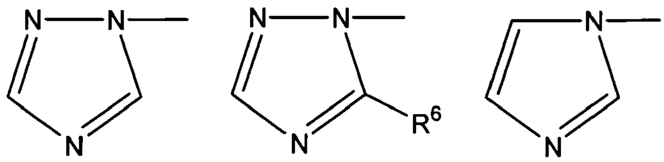

(A) (A') (B)

wherein $R^6$ is a halogen atom or an alkyl group;
R being an optionally substituted hydrocarbyl group other than an alkyl group when X is a group of general formula (B); or a salt thereof.

**24.** The fungicidal composition of any one of claims 1 through 21 further comprising a carrier.

**25.** The fungicidal composition of claim 1, wherein the composition is a controlled release formulationö

**26.** A method of protecting a plant or its propagation material against fungal damage or disease, the method comprising treating the plant or its propagation material with an effective amount of a fungicidal composition comprising a first fungicide having the formula:

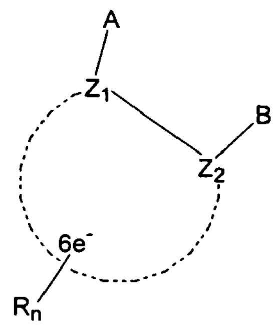

wherein $Z_1$ and $Z_2$ are C or N and are part of an aromatic ring selected from benzene, pyridine, thiophene, furan, pyrrole, pyrazole, thiazole, and isothiazole;
A is selected from --C(X)-amine, --C(O)-$SR_3$, --NH--C(X)$R_4$, and --C(=$NR_3$)-$XR_7$;
B is --$W_m$--$Q(R_2)_3$ or selected from o-tolyl, 1-naphthyl, 2-naphthyl, and 9-phenanthryl, each optionally substituted with halogen or $R_4$ ;
Q is C, Si, Ge, or Sn;
W is --$C(R_3)_pH_{(2-p)}$--; or when Q is C, W is selected from --$C(R_3)_pH_{(2-p)}$--,-$N(R_3)_mH_{(1-m)}$--, --$S(O)_p$--, and --O--;
X is O or S;
n is 0, 1, 2, or 3;
m is 0 or 1;
p is 0, 1, or 2;
each R is independently selected from

a) halo, formyl, cyano, amino, nitro, thiocyanato, isothiocyanato, trimethylsilyl, and hydroxy;
b) $C_1$-$C_4$ alkyl, alkenyl, alkynyl, $C_3$-$C_6$ cycloalkyl, and cycloalkenyl, each optionally substituted with halo, hydroxy, thio, amino, nitro, cyano, formyl, phenyl, $C_1$-$C_4$ alkoxy, alkylcarbonyl, alkylthio, alkylamino, dialkylamino, alkoxycarbonyl, (alkylthio)carbonyl, alkylaminocarbonyl, dialkylaminocarbonyl, alkylsulfinyl, or alkylsulfonyl;
c) phenyl, furyl, thienyl, pyrrolyl, each optionally substituted with halo, formyl, cyano, amino, nitro, $C_1$-$C_4$ alkyl, alkenyl, alkynyl, alkoxy, alkylthio, alkylamino, dialkylamino, haloalkyl, and haloalkenyl;
d) $C_1$-$C_4$ alkoxy, alkenoxy, alkynoxy, $C_3$-$C_6$ cycloalkyloxy, cycloalkenyloxy, alkylthio, alkylsulfinyl, alkylsulfonyl, alkylamino, dialkylamino, alkylcarbonylamino, aminocarbonyl, alkylaminocarbonyl, dialkylaminocarbonyl, alkylcarbonyl, alkylcarbonyloxy, alkoxycarbonyl, (alkylthio)carbonyl, phenylcarbonylamino, phenylamino, each optionally substituted with halo;

wherein two R groups may be combined to form a fused ring;
each $R_2$ is independently selected from alkyl, alkenyl, alkynyl, cycloalkyl, cycloalkenyl and phenyl, each optionally substituted with $R_4$ or halogen; and wherein, when Q is C, $R_2$ may also be selected from halo, alkoxy, alkylthio, alkylamino, and dialkylamino;
wherein two $R_2$ groups may be combined to form a cyclo group with Q;
$R_3$ is $C_1$-$C_4$ alkyl;
$R_4$ is $C_1$-$C_4$ alkyl, haloalkyl, alkoxy, alkylthio, alkylamino, or dialkylamino;
$R_7$ is $C_1$-$C_4$ alkyl, haloalkyl, or phenyl, optionally substituted with halo, nitro, or $R_4$;
or an agronomic salt thereof; and
a second fungicide that is selected from the group consisting of:

a triazole fungicide that is selected from the group consisting of amitrol, azaconazole, bitertanol, bromuconazole, climbazole, clotrimazole, cyproconazole, diclobutrazol, diniconazole, diniconazole-M, epoxiconazole, etaconazole, fenbuconazole, fluotrimazole, flusilazole, flutriafol, furconazole, furconazole-cis, hexaconazole, imibenconazole, ipconazole, metconazole, myclobutanil, paclobutrazol, penconazole, propiconazole, quinconazole, simeconazole tebuconazole, tetraconazole, triadimefon, triadimenol, triazbutil, triticonazole, 1-(4-fluorophenyl)-2-(1H-1,2,4-triazole-1-yl)ethanone, and mixtures thereof, and
a strobilurin type fungicide that is selected from the group consisting of azoxystrobin, dimoxystrobin, famoxadone, kresoxim-methyl, metominostrobin, picoxystrobin, pyraclostrobin, trifloxystrobin and mixtures thereof;

wherein the composition contains the first fungicide and the second fungicide in a ratio by weight of from 1:100 to

100:1.

**27.** The method of claim 26 wherein the fungicidal composition comprises a fungicidal composition of any of claims 1 - 22.

**28.** The method of claim 26, wherein the plant or its propagation material is treated with an amount of the fungicidal composition sufficient to provide a fungicide concentration of from 0.01 mg/kg to 10% by weight.

**29.** The method of claim 26, wherein the plant or its propagation material is treated with an amount of the fungicidal composition sufficient to provide a fungicide concentration of from 0.1 mg/kg to 1% by weight.

**30.** The method of claim 26, wherein the plant or its propagation material is treated with an amount of the fungicidal composition sufficient to provide a fungicide concentration of from 1 mg/kg to 1000 mg/kg.

**31.** The method of any one of claims 26 to 30, wherein the plant or its propagation material is treated with a fungicidal composition in which the weight ratio of the first fungicide relative to the second fungicide is within a range of from 1:10 to 10:1.

**32.** The method of any one of claims 26 to 30, wherein the plant or its propagation material is treated with a fungicidal composition in which the weight ratio of the first fungicide relative to the second fungicide is within a range of from 1:4 to 4:1.

**33.** The method of any one of claims 26 - 32, wherein the agronomic plant is selected from the group consisting of corn, cereals, barley, rye, rice, vegetables, clovers, legumes, beans, peas, alfalfa, sugar cane, sugar beets, tobacco, cotton, rapeseed (canola), sunflower, safflower, and sorghum.

**34.** The method of claim 33, wherein the plant or its propagation material possesses a transgenic event providing the plant with resistance to a herbicide and the treatment comprises foliar application of the herbicide.

**35.** The method of claim 34, wherein the herbicide is selected from the group consisting of glyphosate, glyphosinate, imidazilinone and STS system.

**36.** The method of claim 34, wherein the herbicide is glyphosate.

**37.** The method of any one of claims 26- 36, wherein the fungicidal composition is contained in a controlled release formulation.

**38.** The method according to any one of claims 26 - 37, wherein the fungal damage or disease is one that is caused by a fungal strain that is selected from the group consisting of *Fusarium spp., Rhizoctonia spp., Pseudocercosporella spp., and Gaeumannomyces spp..*

**39.** The method according to claim 38, wherein the fungal strain is selected from the group consisting of *Fusarium oxysporum, Fusarium graminearum, Rhizoctonia cerealis, Pseudocercosporella herpotrichoides,* and *Gaeumannomyces graminis.*

**40.** The method according to claim 38, wherein the fungal strain is selected from the group consisting of *Fusarium oxysporum* f. sp. *pisi, Fusarium graminearum* (Goe 142), *Rhizoctonia cerealis, Pseudocercosporella herpotrichoides* (PH 00/809), *Gaeumannomyces graminis* var. *tritici*, strains 1084-3, UK22A, 1082-2, 1028-3, and 1024-2, *Gaeumannomyces graminis* var. *avenae* (A4), and *Gaeumannomyces graminis* var. *graminis.*

**41.** A plant or its propagation material to which has been administered the fungicidal composition according to the fungicidal composition described in any one of claims 1 to 22.

**42.** The plant or its propagation material of claim 41, wherein the propagation material is a seed.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 32529701 P
- EP 0609099 A1
- WO 0027200 A, Walter, H.
- US 5482974 A
- US 5486621 A
- US 5498630 A
- US 5693667 A
- US 5705513 A
- US 5811411 A
- US 5834447 A
- US 5849723 A
- US 5994270 A
- US 5998466 A
- US 6028101 A
- WO 9307751 A
- EP 0538231 A1
- US 4510136 A
- US 5489606 A
- US 5977152 A
- US 5306712 A
- GB 1533706 A
- EP 1038441 A2
- EP 1038442 A

### Non-patent literature cited in the description

- The Pesficide.Manual. British Crop Protection Council, 2000, 835
- **Tsuda, M. et al.** *The BCPC Conference - Pests & Diseases 2000,* 2000, 557-562
- **Itoh, H. et al.** *Chem. Pharm. Bull.,* 2000, vol. 48 (8), 1148-1153
- The Pesticide Manual. British Crop Protection Council, 2000
- **Itoh, H. et al.** *Chemical and Pharmaceutical Bulletin,* 2000, vol. 8, 1148-1153
- **Tsuda, M. et al.** Simeconazole (F-155), a novel systemic fungicide with broad-spectrum activity for seed treatment. *The BCPC Conference - Pests & Diseases,* 2000
- **Colby, S. R.** *Weeds,* 1967, vol. 15, 20-22